(19) Europäisches Patentamt / European Patent Office / Office européen des brevets

(11) EP 4 286 178 B1

(12) **EUROPEAN PATENT SPECIFICATION**

(45) Date of publication and mention of the grant of the patent: **22.04.2026 Bulletin 2026/17**

(21) Application number: **21923157.8**

(22) Date of filing: **08.12.2021**

(51) International Patent Classification (IPC):
***B60C 1/00*** *(2006.01)* ***C08C 19/02*** *(2006.01)*
***C08K 5/54*** *(2006.01)* ***C08L 15/00*** *(2006.01)*
***C08K 3/013*** *(2018.01)* ***C08K 3/04*** *(2006.01)*
***C08K 3/36*** *(2006.01)*

(52) Cooperative Patent Classification (CPC):
(C-Sets available)
**B60C 1/0016; C08C 19/02; C08C 19/22; C08C 19/25; C08C 19/44; C08K 3/04; C08K 3/22; C08K 3/36; C08K 5/548;** C08K 2003/2296; Y02T 10/86 (Cont.)

(86) International application number:
**PCT/JP2021/045167**

(87) International publication number:
**WO 2022/163152 (04.08.2022 Gazette 2022/31)**

(54) **RUBBER-LIKE POLYMER, METHOD FOR PRODUCING RUBBER-LIKE POLYMER, RUBBER COMPOSITION, AND TIRE TREAD**

KAUTSCHUKARTIGES POLYMER, VERFAHREN ZUR HERSTELLUNG VON KAUTSCHUKARTIGEM POLYMER, KAUTSCHUKZUSAMMENSETZUNG UND REIFENLLAUFFLÄCHE

POLYMÈRE DE TYPE CAOUTCHOUC, PROCÉDÉ DE PRODUCTION DE POLYMÈRE DE TYPE CAOUTCHOUC, COMPOSITION DE CAOUTCHOUC ET BANDE DE ROULEMENT DE PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2021 JP 2021011623**

(43) Date of publication of application:
**06.12.2023 Bulletin 2023/49**

(73) Proprietor: **Asahi Kasei Kabushiki Kaisha**
**Tokyo 1000006 (JP)**

(72) Inventors:
- **MATSUOKA, Daigo**
  **Tokyo 100-0006 (JP)**
- **YASUMOTO, Atsushi**
  **Tokyo 100-0006 (JP)**

(74) Representative: **Strehl & Partner mbB**
**Maximilianstrasse 54**
**80538 München (DE)**

(56) References cited:
**EP-A1- 3 617 237**
**WO-A1-2014/133097**
**WO-A1-2017/047451**
**WO-A1-2017/086208**
**WO-A1-2021/206068**
**JP-A- 2000 053 706**
**JP-A- 2020 514 446**
**US-A1- 2018 201 066**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 286 178 B1

(52) Cooperative Patent Classification (CPC): (Cont.)

C-Sets
**C08F 236/10, C08F 4/48;**
**C08L 15/00, C08L 9/00, C08L 91/06, C08K 3/36, C08K 3/04, C08K 5/548, C08K 3/22, C08K 5/09, C08K 5/18, C08K 3/06, C08K 5/47, C08K 5/31;**
**C08L 15/00, C08L 9/06, C08L 91/06, C08K 3/36, C08K 3/04, C08K 5/548, C08K 3/22, C08K 5/09, C08K 5/18, C08K 3/06, C08K 5/47, C08K 5/31;**
**C08L 15/00, C08L 25/16, C08L 91/06, C08K 3/36, C08K 3/04, C08K 5/548, C08K 3/22, C08K 5/09, C08K 5/18, C08K 3/06, C08K 5/47, C08K 5/31;**
**C08L 15/00, C08L 45/02, C08L 91/06, C08K 3/36, C08K 3/04, C08K 5/548, C08K 3/22, C08K 5/09, C08K 5/18, C08K 3/06, C08K 5/47, C08K 5/31;**
**C08L 15/00, C08L 47/00, C08L 91/06, C08K 3/36, C08K 3/04, C08K 5/548, C08K 3/22, C08K 5/09, C08K 5/18, C08K 3/06, C08K 5/47, C08K 5/31;**
**C08L 15/00, C08L 91/00, C08L 91/06, C08K 3/36, C08K 3/04, C08K 5/548, C08K 3/22, C08K 5/09, C08K 5/18, C08K 3/06, C08K 5/47, C08K 5/31;**
C08F 236/06, C08F 212/08

## Description

Technical Field

The present invention relates to a rubber-like polymer, a method for producing a rubber-like polymer, a rubber composition, and a tire tread.

Background Art

In recent years, tires for vehicles are required to have high level low fuel consumption performance and mechanical strength from the viewpoint of environmental load reduction.

Low fuel consumption performance of a tire is directly linked to fuel consumption of a vehicle, and hence can be an index of environmental load, and mechanical strength of a tire is directly linked to a consumption cycle of the tire, and hence largely affects environmental load.

As a rubber material for a tire meeting the above-described requirements, a hydrogenated rubber-like polymer obtained by hydrogenating a rubber-like polymer is known in recent years.

For example, Patent Literatures 1 to 4 have proposed a rubber composition containing a rubber-like polymer having an ethylene structure and having a crosslinkable unsaturated group introduced therein for purpose of increasing mechanical strength and permanent compression set.

Citation List

Patent Literature

Patent Literature 1: International Publication No. WO2017/150645
Patent Literature 2: International Publication No. WO2019/151126
Patent Literature 3: International Publication No. WO2019/151127
Patent Literature 4: International Publication No. WO2019/078083

WO 2014/133097 A1 discloses a tire member which, in an example, uses a modified conjugated diene-based rubber wherein the content of saturated groups derived from 1,4-butadiene is 4.3 mol%.

WO2017/047451 A1, WO2017/086208 A1 and JP2000 053706 A disclose hydrogenated conjugated diene-based polymers for use in tires.

Summary of Invention

Technical Problem

It is known that low fuel consumption performance and mechanical strength of a vulcanizate of a rubber-like polymer largely depend on a ratio of an aromatic vinyl monomer and ratios of repeating units derived from a conjugated diene monomer (1,2-vinyl bond ratio and 1,4-vinyl bond ratio) in the rubber-like polymer in general.

Specifically, as a 1,2-vinyl bond ratio is larger and an aromatic vinyl monomer ratio is smaller in a rubber-like polymer, a vulcanizate obtained therefrom is excellent in low fuel consumption performance, but tends to be lowered in tensile strength, that is, a kind of mechanical strength.

On the other hand, a hydrogenated rubber-like polymer in which a saturated bond has been introduced to a main chain is improved in mechanical strength, and hence, hydrogenation of a rubber-like polymer is known as one method for improving performance balance.

When an unsaturated bond is hydrogenated into a saturated bond, there arises a problem that a vulcanization rate in obtaining a vulcanizate is largely lowered. The lowering of a vulcanization rate causes serious problems that deterioration of a tire production rate is caused, and that co-crosslinkability with another rubber material may be deteriorated.

Therefore, an object of the present invention is to provide a rubber-like polymer with which a practically sufficient vulcanization rate can be obtained, and from which a rubber composition excellent in balance between low fuel consumption performance and mechanical strength can be obtained.

Solution to Problem

The present inventors have made earnest studies to solve the above-described problems of the conventional techniques, and as a result, have found that a polymer exhibiting desired performance can be obtained by employing specific component ratios, and employing a specific molecular weight, resulting in accomplishing the present invention.
Specifically, the present invention is set out in the appended claims.

Advantageous Effect of Invention

The present invention can provide a rubber-like polymer with which a practically sufficient vulcanization rate can be obtained, and from which a rubber composition excellent in balance between low fuel consumption performance and mechanical strength can be obtained.

Description of Embodiment

Now, an embodiment for practicing the present invention (hereinafter referred to as the "present embodiment") will be described in detail.
It is noted that the following present embodiment is merely an example for describing the present invention, and that the present invention is not limited to the following embodiment. The present invention can be practiced with modifications and changes appropriately made within the scope of the claims.

[Rubber-like Polymer]

In a rubber-like polymer of the present embodiment,

a sum of a content C1 of a structure represented by the following formula (1) and a content C2 of a structure represented by the following formula (2) is 40 mol% or more and 60 mol% or less,
a content C3 of a structure represented by the following formula (3) is 15 mol% or more and 50 mol% or less,
a content C4 of a structure represented by the following formula (4) is 5 mol% or more and 25 mol% or less,
a content S of an aromatic vinyl monomer unit is 4 mol% or more and 15 mol% or less,
a weight average molecular weight measured by gel permeation chromatography (GPC) is 300,000 or more, and
a modification ratio measured by column adsorption GPC is 60% by mass or more:

(1) 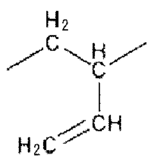 (2) 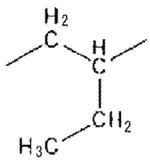

(3) 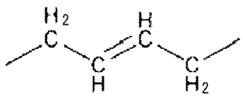 or 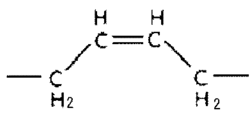 (4) 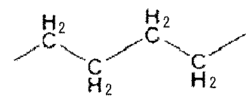

Since the content S of an aromatic vinyl monomer unit and the contents C1 to C4 of the structures respectively represented by the formulas (1) to (4) are specified to fall in the above-described specific ranges in the rubber-like polymer of the present embodiment as described above, a practically sufficient vulcanization rate can be obtained in obtaining a vulcanizate, and a rubber composition excellent in balance between low fuel consumption performance and mechanical strength tends to be able to be obtained.
Relationship between the respective structures and performance will now be described.
In the rubber-like polymer of the present embodiment, the structure represented by the formula (1) corresponds to, for example, a 1,2-vinyl bond unit of a conjugated diene compound, and a raw material thereof is not especially limited as long as the structure is the same as that represented by the formula (1). The structure represented by the formula (2) corresponds to, for example, a unit obtained by hydrogenating a 1,2-vinyl bond of a conjugated diene compound, and a raw material thereof is not especially limited as long as the structure is the same as that represented by the formula (2).
Assuming that a sum of respective structural units contained in the rubber-like polymer of the present embodiment is 100 mol%, a sum of the contents C1 and C2 is 40 mol% or more and 60 mol% or less, preferably 45 mol% or more and 60 mol% or less, and more preferably 50 mol% or more and 60 mol% or less.

When the sum of the contents C1 and C2 is within the above-described range, low fuel consumption performance of a vulcanizate tends to be excellent.

The structure represented by the formula (3) corresponds to, for example, a 1,4-vinyl bond unit of a conjugated diene compound, and a raw material thereof is not especially limited as long as the structure is the same as that represented by the formula (3).

Assuming that the sum of the respective structural units contained in the rubber-like polymer of the present embodiment is 100 mol%, the content C3 is 15 mol% or more and 50 mol% or less, and a lower limit is preferably 20 mol% or more, and more preferably 30 mol% or more. An upper limit is preferably preferably 40 mol% or less.

When the content C3 is within the above-described range, a vulcanization rate in obtaining a vulcanizate tends not to become too low.

The structure represented by the formula (4) corresponds to, for example, a structure obtained by hydrogenating a 1,4-vinyl bond unit of a conjugated diene compound, and a raw material thereof is not especially limited as long as the structure is the same as that represented by the formula (4).

Assuming that the sum of the respective structural units contained in the rubber-like polymer of the present embodiment is 100 mol%, the content C4 is 5 mol% or more and 25 mol% or less. A lower limit is preferably 7 mol% or more, and further preferably 10 mol% or more.

When the content C4 is within the above-described range, tensile strength obtained in the form of a vulcanizate tends to be excellent.

Besides, from the viewpoint of a vulcanization rate, an upper limit of the content C4 is preferably 20 mol% or less, and more preferably 18 mol% or less.

The contents C1 to C4 of the structures respectively represented by the formulas (1) to (4) in the rubber-like polymer of the present embodiment can be calculated by $^1$H-NMR measurement, and specifically can be calculated by a method described in Examples below.

Assuming that the sum of the respective structural units contained in the rubber-like polymer of the present embodiment is 100 mol%, the content S of an aromatic vinyl monomer unit is 4 mol% or more and 15 mol% or less. An upper limit is preferably 10 mol% or less, and further preferably 7 mol% or less.

A lower limit is preferably 4 mol or more, and more preferably 6 mol or more.

When the content S is within the above-described range, low fuel consumption performance obtained in the form of a vulcanizate tends to be excellent.

The content S in the rubber-like polymer of the present embodiment can be calculated by NMR measurement, and specifically can be measured by a method described in Examples below.

(Aromatic Vinyl Monomer)

The rubber-like polymer of the present embodiment contains a structural unit derived from an aromatic vinyl compound (hereinafter also referred to as the "aromatic vinyl monomer unit").

Examples of the aromatic vinyl compound include, but are not limited to, styrene, p-methylstyrene, $\alpha$-methylstyrene, vinylethylbenzene, vinylxylene, vinylnaphthalene, and diphenylethylene.

Among these, styrene is preferred from the viewpoint of industrial availability.

One of these may be used, or two or more of these may be used together.

(Conjugated Diene Compound)

In the rubber-like polymer of the present embodiment, each of the structural units respectively represented by the formulas (1) to (4) is preferably a structural unit derived from a conjugated diene compound (hereinafter also referred to as the "conjugated diene monomer").

Examples of the conjugated diene compound include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene and isoprene are preferred, and 1,3-butadiene is more preferred from the viewpoint of industrial availability.

One of these may be used, or two or more of these may be used together.

(Weight Average Molecular Weight of Rubber-like Polymer)

The rubber-like polymer of the present embodiment has a weight average molecular weight (Mw) obtained by gel permeation chromatography (GPC) of 300,000 or more. It is more preferably 400,000 or more, and more preferably 440,000 or more.

When the Mw of the rubber-like polymer of the present embodiment is 300,000 or more, a vulcanizate obtained therefrom tends to have high tensile strength.

The Mw of the rubber-like polymer of the present embodiment is preferably 700,000 or less, more preferably 650,000 or less, and further preferably 600,000 or less. When the Mw is 700,000 or less, processability in kneading obtained when the rubber-like polymer of the present embodiment is used in a tire composition is excellent, a filler is sufficiently dispersed therein, and excellent low fuel consumption performance is obtained.
The weight average molecular weight of the rubber-like polymer can be calculated based on a molecular weight in terms of polystyrene measured by GPC, and can be measured by a method described in Examples below.

(Modification of Rubber-like Polymer)

The rubber-like polymer of the present embodiment preferably contains a tin atom, a nitrogen atom, or a silicon atom, and more preferably contains both a nitrogen atom and a silicon atom from the viewpoint of low fuel consumption performance obtained in use as a tire material.
In the present embodiment, a compound containing a nitrogen atom is designated as a modifier, and addition of a modifier to the rubber-like polymer is referred to as modification.
The rubber-like polymer of the present embodiment has a modification ratio measured by column adsorption GPC of 60% by mass or more.
When the modification ratio is 60% by mass or more, excellent low fuel consumption performance tends to be obtained in the form of a vulcanizate.
The modification ratio of the rubber-like polymer of the present embodiment is more preferably 70% by mass or more, and further preferably 75% by mass or more.
The modification ratio can be measured by chromatography capable of separating a modified component having a functional group from an unmodified component.
An example of the method employing chromatography includes a method in which a column for gel permeation chromatography using, as a filler, a polar component adsorbing a specific functional group such as silica is used, internal standard of a non-adsorbed component is used for comparison, to perform quantitative determination (column adsorption GPC).
More specifically, the modification ratio is obtained by measuring an amount of adsorption onto a silica-based column based on a difference between a chromatogram obtained by measuring a sample solution containing a sample and low molecular weight internal standard polystyrene with a polystyrene-based gel column and a chromatogram obtained by measuring the sample solution with the silica-based column.
Further specifically, the modification ratio can be measured by a method described in Examples below.
In the rubber-like polymer of the present embodiment, the modification ratio can be controlled by adjusting an amount of a modifier to be added and a reaction method, and thus, can be controlled to fall in the above-described numerical range.
For example, the modification ratio can be controlled as described above through control of polymerization conditions by combining a polymerization method using an organolithium compound having at least one nitrogen atom in a molecule described below, a method for copolymerizing a monomer having at least one nitrogen atom in a molecule, and a method using a modifier of a structural formula described below.

(Nitrogen Content)

The rubber-like polymer of the present embodiment preferably has a nitrogen content measured by trace nitrogen analysis of 10 ppm or more and 80 ppm or less.
When the nitrogen content is 10 ppm or more, excellent tensile strength tends to be exhibited. The nitrogen content is more preferably 20 ppm or more, further preferably 30 ppm or more, still further preferably 35 ppm or more, still further preferably 37 ppm or more, and particularly preferably 40 ppm or more.
When the rubber-like polymer of the present embodiment is modified at a terminal, the nitrogen content tends to be reduced as a molecular chain is longer to increase a molecular weight even if the number of nitrogen atoms contained in a modifier is the same. If a molecular chain is long, tensile strength is favorable when the nitrogen content is 10 ppm or more, and on the other hand, if a molecular weight is comparatively low, the nitrogen content is preferably set to about 35 ppm or more in accordance with the molecular weight.
The nitrogen content of the rubber-like polymer is preferably 80 ppm or less, more preferably 70 ppm or less, and further preferably 60 ppm or less from the viewpoint of processability.
The nitrogen content can be measured by a method described in Examples below.
The nitrogen content can be controlled to fall in the above-described numerical range by adjusting the type and an amount of a modifier to be added.
In comparison using the same rubber-like polymer, the nitrogen content tends to be larger as the modification ratio is higher, but the nitrogen content depends also on the type and the molecular weight of a modifier, and hence is not

always correlated with the modification ratio. As a result, as described above, the modification ratio tends to easily affect low fuel consumption performance obtained in using the rubber-like polymer in a tire, and the nitrogen content tends to easily affect tensile strength.

In the rubber-like polymer of the present embodiment, as a method for separately controlling the modification ratio and the nitrogen content, a method in which a modifier having a high nitrogen content is added is effective when the nitrogen content is desired to be increased with the modification ratio retained. When such a modifier having a high nitrogen content is used, silanization of a silane coupling agent is accelerated in kneading a rubber composition for a tire using the rubber-like polymer, and hence a tire having high tensile strength tends to be obtained. Similarly, a method in which a molecular weight is adjusted can be a method for separately controlling the modification ratio and the nitrogen content of the rubber-like polymer. Specifically, when the molecular weight of the rubber-like polymer is reduced, the nitrogen content can be changed with the modification ratio retained.

(Modifier)

The rubber-like polymer of the present embodiment has a modification ratio of 60% by mass or more as described above, and is modified with a modifier.

The modifier is not especially limited, and any of conventionally known modifiers can be used. The modifier is preferably a compound having both a nitrogen atom and a silicon atom from the viewpoint of low fuel consumption performance of a vulcanizate of the rubber-like polymer of the present embodiment, and is more preferably a nitrogen group-containing alkoxysilane compound.

Examples of the nitrogen-group containing alkoxysilane compound include, but are not limited to, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl) amine, tris(trimethoxysilylmethyl)amine, tris(2-trimethoxysilylethyl) amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, N1-(3-(bis(3-(trimethoxysilyl)propyl)amino)propyl)-N1-methyl-N3-(3-(methyl(3-(trimethoxysilyl)propyl)amino) propyl)-N3-(3-(trimethoxysilyl)propyl)-1,3-propanediamine, and 3-(4-methylpiperazine-1-yl)propyltriethoxysilane.

(Monomer Unit having Unsaturated Group of Rubber-like Polymer)

The rubber-like polymer of the present embodiment preferably contains 2% by mass or more of a monomer unit having an unsaturated group, such as a conjugated diene monomer unit, or myrcene.

The monomer unit having an unsaturated group is not limited to a conjugated diene monomer unit and myrcene, but may include another monomer unit.

From the viewpoints of economic performance and productivity, the rubber-like polymer of the present embodiment preferably contains a conjugated diene monomer unit.

Since a conjugated diene monomer unit or myrcene has a double bond, when such a monomer unit is contained, the rubber-like polymer of the present embodiment has a crosslinkable unsaturated group.

A content of the monomer unit having an unsaturated group in the rubber-like polymer of the present embodiment is closely related to an iodine value.

When the content of the monomer unit having an unsaturated group such as a conjugated diene monomer unit or myrcene is 2% by mass or more, the rubber-like polymer of the present embodiment is excellent from the viewpoint of ease of crosslinking.

The content of the monomer unit having an unsaturated group such as a conjugated diene monomer unit or myrcene is more preferably 3% by mass or more, and further preferably 6% by mass or more.

The content of the monomer unit having an unsaturated group such as a conjugated diene monomer unit or myrcene is preferably 50% by mass or less, more preferably 30% by mass or less, and further preferably 20% by mass or less. Thus, weather resistance and aging resistance tend to be excellent.

The monomer unit having an unsaturated group such as a conjugated diene monomer unit or myrcene is preferably a conjugated diene monomer unit from the viewpoints of economic performance and productivity.

The content of the monomer unit having an unsaturated group in the rubber-like polymer of the present embodiment can be measured by a NMR measurement method described in Examples below, and can be controlled

to fall in the above-described numerical range by adjusting an amount of a monomer having an unsaturated group such as a conjugated diene monomer unit or myrcene described below to be added, and a hydrogenation rate of a conjugated diene monomer.

Intermolecular and intramolecular distributions of a hydrogenation rate of the rubber-like polymer of the present embodiment, and monomer units such as ethylene, a conjugated diene monomer, myrcene, and a vinyl aromatic monomer are not especially limited, and these may be even, uneven, or distributed.

(Silicon Content of Rubber-like Polymer)

The rubber-like polymer of the present embodiment preferably has a silicon content of 50 ppm or more and 200 ppm or less.

When the silicon content is 50 ppm or more, in a rubber composition obtained by mixing the rubber-like polymer of the present embodiment and a reinforcing material, interaction between the rubber-like polymer and the reinforcing material is increased to obtain excellent tensile strength.

The silicon content of the rubber-like polymer of the present embodiment is more preferably 80 ppm or more, and further preferably 100 ppm or more.

When the silicon content is 200 ppm or less, discoloration of the rubber-like polymer otherwise caused by degradation over time can be inhibited. The silicon content of the rubber-like polymer of the present embodiment is more preferably 170 ppm or less, and further preferably 150 ppm or less.

The silicon content of the rubber-like polymer can be controlled to fall in the above-described numerical range by performing a coupling reaction with a silicon-containing coupling agent after polymerization step, and by adjusting an amount of the silicon-containing coupling agent to be added during production process of the rubber-like polymer.

(Mooney Viscosity)

A Mooney viscosity of the rubber-like polymer of the present embodiment is an index including information on the molecular weight, a molecular weight distribution, a branch number, a content of a softener and the like of the rubber-like polymer.

A Mooney viscosity measured at 100°C of the rubber-like polymer of the present embodiment is preferably 50 or more, more preferably 60 or more, further preferably 70 or more, and still further preferably 90 or more from the viewpoints of abrasion resistance, steering stability, and breaking strength obtained when a crosslinking rubber composition containing the rubber-like polymer of the present embodiment and a crosslinking agent is used in a tire.

On the other hand, from the viewpoints of productivity of a rubber composition using the rubber-like polymer of the present embodiment, and processability obtained in the form of a rubber composition obtained with a filler and the like compounded, the Mooney viscosity is preferably 200 or less, more preferably 150 or less, further preferably 130 or less, and still further preferably 110 or less.

As a method for measuring the Mooney viscosity, a method prescribed in ISO 289 described below can be applied.

The Mooney viscosity of the rubber-like polymer of the present embodiment can be controlled to fall in the above-described numerical range by adjusting an amount of a polymerization initiator to be added, and an amount and the type of a coupling agent to be added in polymerization step of the rubber-like polymer.

(Ratio Between Weight Average Molecular Weight and Mooney Viscosity (Mw/ (ML x 10,000) of Rubber-like Polymer)

In the rubber-like polymer of the present embodiment, a ratio between the weight average molecular weight Mw and the Mooney viscosity ML, Mw/ (ML x 10,000), is preferably 0.68 or more and 0.85 or less.

In general, ML tends to largely depend on Mw. When the Mw of the rubber-like polymer is increased, mechanical strength of the rubber-like polymer can be improved, but when the Mw of the rubber-like polymer is simply increased, the ML tends to be largely increased incidentally. High ML tends to cause deterioration of processability of the rubber-like polymer, and deteriorate dispersibility of a filler therein. In other words, when the Mw is increased for improving mechanical strength of the rubber-like polymer, the ML is unavoidably increased to cause deterioration of processability.

Examples of a method for breaking the correlation between Mw and ML of the rubber-like polymer include a method in which a branched structure of the rubber-like polymer is changed, and a method in which composition ratios in the rubber-like polymer are changed. For example, when a three- or more branched structure is employed instead of a linear structure, even if the molecular weight is the same, a length of each molecular chain is reduced as compared with that in employing the linear structure, and hence, such a polymer tends to be more easily kneaded with another material than in employing the linear structure.

On the contrary, the present inventors have found that the ratio between the Mw and the ML of the rubber-like

polymer can be adjusted by specifying the contents C1, C2, C3, and C4 of the structures of the formulas (1) to (4) corresponding to repeating units, and the content S of an aromatic vinyl monomer unit respectively to the prescribed ranges. It is determined which of the structures of the formulas (1) to (4) is employed in accordance with which of a 1,2-vinyl bond or a 1,4-vinyl bond is used in binding conjugated diene at the time of polymerization, and whether or not such a bond is hydrogenated. A rate of a hydrogenation reaction also differs between a 1,2-vinyl bond and a 1,4-vinyl bond, and therefore, the control of a hydrogenation rate also affects the contents C1 to C4 of the structures of the formulas (1) to (4). It is a novel finding that ML of a rubber-like polymer is controlled by adjusting a vinyl bond content and a hydrogenation rate in the rubber-like polymer so as to contain, in the rubber-like polymer, a prescribed structure in a prescribed content, and thus, dependence of ML on Mw can be reduced, resulting in increasing design width of a rubber-like polymer.

In the rubber-like polymer of the present embodiment, Mw/(ML x 10,000) is preferably 0.68 or more and 0.85 or less from the viewpoint of obtaining high tear strength.

A lower limit is more preferably 0.73 or more, and further preferably 0.78 or more.

An upper limit is more preferably 0.84 or less, and further preferably 0.80 or less.

When Mw/ (ML x 10,000) is within the above-described numerical range, a rubber composition using the rubber-like polymer of the present embodiment is excellent in balance between mechanical strength and dispersibility of a filler, namely, processability, and exhibits excellent tear strength.

In general, ML of a polymer compound largely depends on Mw, and when the Mw is increased, the number of entanglements of polymer chains is increased, resulting in increasing mechanical strength. On the other hand, it is known that when the Mw is increased, the ML corresponding to viscosity is also increased. Accordingly, for adjusting the ratio of Mw/(ML x 10,000) to a prescribed range, it is necessary not only to control the Mw but also to break the correlation between the Mw and the ML as described above, and in order to break the correlation between the Mw and the ML, it is effective to adjust a molecular weight between polymer chain entangled portions.

Here, the term "molecular weight between polymer chain entangled portions" refers to a minimum molecular weight necessary for polymer chains to entangle with each other in one portion, and the term "number of entanglements of polymer chains" refers to a ratio between a molecular weight of a polymer compound and a molecular weight between polymer chain entangled portions, namely, (molecular weight/molecular weight between polymer chain entangled portions).

A molecular weight between polymer chain entangled portions is a value inherent to the polymer, and tends to depend on ratios of structures corresponding to repeating units of the polymer chain (for example, depending on configuration, whether it is linear or branched, whether it is a single bond or a double bond, and the like). Accordingly, Mw/ (ML x 10,000) can be controlled to fall in the above-described numerical range by adjusting the Mw of the polymer chain, and the contents of the prescribed structures corresponding to repeating units of the polymer chain.

In rubber-like polymers different in the contents of prescribed structures incorporated into the polymers, the molecular weight between polymer chain entangled portions and the number of entanglements of polymer chains have been measured, resulting in finding the following: In the rubber-like polymer of the present embodiment, the structure of the formula (2) corresponding to a repeating unit tends to be more difficult to entangle than the structure of the formula (1) corresponding to a repeating unit, and the structure of the formula (3) corresponding to a repeating unit tends to be more difficult to entangle than the structure of the formula (4) corresponding to a repeating unit.

Accordingly, when values of the content C2 of the structure of the formula (2) and the content C3 of the structure of the formula (3) are increased, and values of the content C1 of the structure of the formula (1) and the content C4 of the structure of the formula (4) are reduced, the molecular weight between entangled portions is increased, and therefore, even a rubber-like polymer having large Mw can be made difficult to be increased in ML, and based on such trend, Mw/ (ML x 10,000) can be controlled to fall in the prescribed range.

When Mw/ (ML x 10,000) is controlled, processability is improved, and in addition, the filler is homogeneously dispersed, and as a result, a flexible rubber composition having few voids and having sufficient entanglement of the rubber-like polymer can be obtained. This rubber composition exhibits excellent tear strength.

Tear strength can be measured by a method described below.

The molecular weight between polymer chain entangled portions can be calculated by measuring a storage modulus of a rubber-like elastic region by viscoelasticity measurement of the rubber-like polymer.

(Softener of Rubber-like Polymer)

The rubber-like polymer of the present embodiment may contain a rubber softener if necessary.

A content of the rubber softener is preferably 30% by mass or less.

From the viewpoint of improving processability obtained in compounding an inorganic filler or the like in producing a tire, the amount of the rubber softener to be added in the rubber-like polymer of the present embodiment is preferably 1 to 30% by mass.

When the rubber-like polymer has a high molecular weight, for example, when the weight average molecular

weight is over 1,000,000, the amount of the rubber softener to be added is preferably 15 to 30% by mass, and on the other hand, from the viewpoint of increasing the degree of freedom in amount of a filler to be compounded to obtain a rubber composition, the amount of the rubber softener to be added is preferably 1 to 15% by mass.

The content of the rubber softener in a rubber composition using the rubber-like polymer of the present embodiment is more preferably 20% by mass or less, further preferably 10% by mass or less, and still further preferably 5% by mass or less from the viewpoint of inhibiting degradation over time otherwise caused in the form of a tire.

The rubber softener is not especially limited, and examples include an extender oil, a low molecular weight rubber-like polymer, and a resin, and from the viewpoints of processability, productivity, and economic performance, an extender oil is preferred. Besides, from the viewpoint of abrasion resistance of a rubber composition for a tire, a low molecular weight rubber-like polymer capable of contributing to crosslinking is preferred.

As a method for adding the rubber softener to the rubber-like polymer of the present embodiment, although not limited to the following, a method in which the rubber softener is added to a solution of the rubber-like polymer to be mixed, and the thus obtained polymer solution containing the rubber softener is subjected to desolvation is preferably employed.

Preferable examples of the softener include, but are not limited to, an aromatic oil, a naphthenic oil, and a paraffin oil.

Among these, from the viewpoint of environmental safety, and from the viewpoints of oil bleed prevention and wet grip performance, an aroma substitute oil containing 3% by mass or less of polycyclic aromatic (PCA) component in accordance with the IP 346 method is preferred.

Examples of the aroma substitute oil include TDAE (treated distillate aromatic extract), MES (mild extraction solvate) and the like described in Kautschuk Gummi Kunststoffe 52(12) 799 (1999) as well as RAE (residual aromatic extract).

(Other Additives)

The rubber-like polymer of the present embodiment may contain various additives such as an antioxidant if necessary.

[Method for Producing Rubber-like Polymer]

A method for producing a rubber-like polymer of the present embodiment includes a step of copolymerizing a conjugated diene compound and an aromatic vinyl compound, and hydrogenating the resultant copolymer such that a hydrogenation rate of 90% or less is achieved.

In the method for producing a rubber-like polymer of the present embodiment, a conjugated diene compound and an aromatic vinyl compound are used as polymerizable monomers, and the hydrogenation rate is appropriately controlled, so that the contents C1, C2, C3, and C4 can be controlled respectively to fall in the prescribed ranges in the rubber-like polymer of the present embodiment.

Specifically, when a 1,2-vinyl bond content, a 1,4-vinyl bond content, and a hydrogenation amount of a rubber-like polymer before hydrogenation are adjusted, the contents C1, C2, C3, and C4 can be controlled to arbitrary ratios.

The 1,2-vinyl bond content and the 1,4-vinyl bond content of the rubber-like polymer before hydrogenation can be controlled by adjusting an amount of a polar compound to be added described below.

If the contents C1 to C4 are to be controlled by hydrogenation of a polymer, the contents C1 to C4 can be controlled to respectively fall in desired ranges, for example, by setting the hydrogenation rate to 65% when an aromatic vinyl monomer unit content is 15.0% by mass and a 1,2-vinyl bond content in a conjugated diene structure is 50 mol%.

In other words, a sum of the contents C1 and C2 can be controlled to fall in a range of 40 mol or more and 60 mol% or less, the content C3 can be controlled to fall in a range of 15 mol% or more and 50 mol% or less, and the content C4 can be controlled to fall in a range of 5 mol% or more and 25 mol% or less.

As for the hydrogenation rate of the rubber-like polymer of the present embodiment, a hydrogenation rate of a conjugated diene compound, for example, a structural unit derived from butadiene is preferably 30% or more, and preferably 90% or less. A lower limit is more preferably 50% or more, and further preferably 60% or more. An upper limit is more preferably 85% or less, and further preferably 80% or less.

When the hydrogenation rate of a structural unit derived from a conjugated diene compound is 30% or more in the rubber-like polymer of the present embodiment, a vulcanizate obtained therefrom tends to be excellent in breaking strength and elongation at break.

When the hydrogenation rate of the structural unit derived from a conjugated diene compound is 90% or less, a crosslink density obtained after vulcanization is increased, and hence a vulcanizate obtained therefrom tends to be excellent in breaking strength and low fuel consumption performance.

The hydrogenation rate of the rubber-like polymer of the present embodiment can be controlled by adjusting an amount of hydrogen to be added to the structural unit derived from a conjugated diene compound.

A temperature of the hydrogenation reaction is not especially limited, and is preferably 60 to 105°C, and more preferably 70 to 100°C.

The hydrogenation rate can be measured by $^1$H-NMR.

In the method for producing a rubber-like polymer of the present embodiment, anionic polymerization is preferably performed in a polymerization step from the viewpoint that a molecular structure is thus easily controlled. Besides, a part of or most of double bonds in a conjugated diene-based polymer obtained by polymerizing or copolymerizing at least a conjugated diene monomer are hydrogenated.

An example of the method for producing a rubber-like polymer of the present embodiment includes a method in which hydrogenation is performed after a conjugated diene monomer is polymerized by anionic polymerization, or copolymerized with an additional monomer if necessary with various additives under various conditions as described in, for example, International Publication No. WO96/05250, Japanese Patent Laid-Open No. 2000-053706, and International Publication Nos. WO2003/085010, WO2019/151126, WO2019/151127, WO2002/002663, and WO2015/006179.

As an aromatic vinyl monomer, ethylene, α-olefin, a conjugated diene monomer, and another monomer to be used in the polymerization in the method for producing a rubber-like polymer of the present embodiment, the same ones as those described in the aforementioned various literatures can be used.

Each of the polymerization step and the hydrogenation step described above may be performed by either of a batch method and a continuous method.

(Polymerization Step)

In the polymerization step, a conjugated diene compound, an aromatic vinyl compound, and another monomer used if necessary are polymerized with a polymerization initiator used.

An example of the polymerization initiator used in the polymerization step includes an organomonolithium compound.

Examples of the organomonolithium compound include, but are not limited to, a low molecular weight compound, and an organomonolithium compound of a solubilized oligomer.

Examples of the organomonolithium compound include, with respect to a binding mode between the organic group and the lithium, a compound having a carbon-lithium bond, a compound having a nitrogen-lithium bond, and a compound having a tin-lithium bond.

An amount of the organomonolithium compound to be used as the polymerization initiator is determined preferably in accordance with the structure of the rubber-like polymer of the present embodiment to be obtained, and the molecular weight of the rubber-like polymer.

An amount of a monomer such as a conjugated diene compound to be used with respect to the amount of the polymerization initiator to be used relates to a degree of polymerization of the rubber-like polymer, namely, relates to a number average molecular weight and/or the weight average molecular weight of the rubber-like polymer.

Accordingly, in order to increase the molecular weight, adjustment may be made to reduce the amount of the polymerization initiator to be used, and in order to reduce the molecular weight, adjustment may be made to increase the amount of the polymerization initiator to be used.

The organomonolithium compound used as the polymerization initiator is preferably an alkyllithium compound having a substituted amino group, or dialkylaminolithium from the viewpoint that it is used as a method for introducing a nitrogen atom into the rubber-like polymer.

In this case, a rubber-like polymer having, at a polymerization starting terminal, a nitrogen atom of an amino group is obtained.

A substituted amino group refers to an amino group not having active hydrogen, or having a structure in which active hydrogen is protected.

Examples of an alkyllithium compound having an amino group not having active hydrogen include, but are not limited to, 3-dimethylaminopropyllithium, 3-diethylaminopropyllithium, 4-(methylpropylamino)butyllithium, and 4-hexamethyleneimino butyllithium.

Examples of an alkyllithium compound having an amino group with a structure in which active hydrogen is protected include, but are not limited to, 3-bistrimethylsilylamino propyllithium, and 4-trimethylsilylmethylamino butyllithium.

Examples of dialkylaminolithium include, but are not limited to, lithium dimethylamide, lithium diethylamide, lithium dipropylamide, lithium dibutylamide, lithium din-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenethylamide, lithium hexamethyleneimide, lithium pyrrolidide, lithium piperidide, lithium heptamethyleneimide, lithium morpholide, 1-lithio-azacyclooctane, 6-lithio-1,3,3-trimethyl-6-azabicyclo[3.2.1]octane, and 1-lithio-1,2,3,6-tetrahydropyridine.

Such an organomonolithium compound having a substituted amino group can be used in the form of an

organomonolithium compound of a solubilized oligomer obtained by reacting a small amount of a polymerizable monomer, such as a monomer of 1,3-butadiene, isoprene, or styrene.

The organomonolithium compound used as the polymerization initiator is preferably an alkyllithium compound from the viewpoints of industrial availability and polymerization reaction controllability. In this case, a rubber-like polymer having an alkyl group at a polymerization starting terminal is obtained.

Examples of the alkyllithium compound include, but are not limited to, n-butyllithium, sec-butyllithium, tert-butyllithium, n-hexyllithium, benzyllithium, phenyllithium, and stilbene lithium.

The alkyllithium compound is preferably n-butyllithium or sec-butyllithium from the viewpoints of industrial availability and polymerization reaction controllability.

One of the above-described organomonolithium compounds may be used, or two or more of these may be used together. Alternatively, another organic metal compound may be used together.

Examples of another organic metal compound include alkaline earth metal compounds, other alkali metal compounds, and other organic metal compounds.

Examples of the alkaline earth metal compounds include, but are not limited to, organomagnesium compounds, organocalcium compounds, and organic strontium compounds. Other examples include alkoxide, sulfonate, carbonate and amide compounds of alkaline earth metals.

Examples of the organomagnesium compounds include dibutylmagnesium, and ethylbutylmagnesium.

Examples of the other organic metal compounds include organoaluminum compounds.

Examples of a polymerization reaction mode employed in the polymerization step include, but are not limited to, polymerization reaction modes of a batch method and a continuous method.

In the continuous method, one or a series of two or more reactors can be used. As a reactor used in the continuous method, for example, a tank or tubular reactor equipped with a stirrer is used.

In the continuous method, a monomer, an inert solvent, and a polymerization initiator are preferably continuously fed to the reactor, a polymer solution containing a polymer is obtained in the reactor, and the polymer solution is continuously discharged.

As a reactor used in the batch method, for example, a tank reactor equipped with a stirrer is used.

In the batch method, a monomer, an inert solvent, and a polymerization initiator are preferably fed to the reactor, a monomer is continuously or intermittently added during polymerization if necessary, a polymer solution is obtained in the reactor, and the polymer solution is discharged after completing the polymerization.

In the method for producing a rubber-like polymer of the present embodiment, for obtaining a polymer having an active terminal at a high ratio, the continuous method capable of continuously discharging a polymer to be supplied to a next reaction in a short period of time is preferably employed.

In the polymerization step of the rubber-like polymer of the present embodiment, polymerization is performed preferably in an inert solvent.

Examples of the inert solvent include, but are not limited to, hydrocarbon-based solvents such as a saturated hydrocarbon, and an aromatic hydrocarbon.

Specific examples of the hydrocarbon-based solvents include, but are not limited to, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene, and a hydrocarbon containing a mixture of these.

Before performing the polymerization step, arenes and acetylenes, that is, impurities, are preferably treated with an organic metal compound because a rubber-like polymer having an active terminal at a high concentration tends to be thus obtained, and a rubber-like polymer having a high modification ratio tends to be thus obtained through modification step.

In the polymerization step, a polar compound may be added. Thus, an aromatic vinyl compound and a conjugated diene compound can be randomly copolymerized. A polar compound tends to be able to be used as a vinylizing agent for controlling a microstructure of a conjugated diene portion. Besides, it tends to also have an effect of accelerating the polymerization reaction.

Examples of the polar compound include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium-tert-amylate, potassium-tert-butylate, sodium-tert-butylate, and sodium amylate; and phosphine compounds such as triphenylphosphine.

One of these polar compounds may be used, or two or more of these may be used together.

An amount of the polar compound to be used is not especially limited, and can be selected depending on purposes and the like, and is preferably 0.01 moles or more and 10 moles or less per mole of the polymerization initiator.

When the polar compound is added in an amount ranging from 0.01 moles or more to 10 moles or less per mole of

the polymerization initiator, the 1,2-bond content increases whereas the 1,4-bond content decreases on the contrary, in the rubber-like polymer. As a result, the sum of the contents C1 and C2 tends to be increased, and the contents C3 and C4 tend to be reduced in the rubber-like polymer.

Such a polar compound (vinylizing agent) can be used as an agent for adjusting a microstructure of a conjugated diene portion of the rubber-like polymer in an appropriate amount in accordance with a desired 1,2-vinyl bond content. Many of polar compounds simultaneously have an effective randomization function in copolymerization of a conjugated diene compound and an aromatic vinyl compound, and tend to be usable as an agent for adjusting a distribution of the aromatic vinyl compound and adjusting a styrene block content.

As a randomizing method in copolymerization of a conjugated diene compound and an aromatic vinyl compound, as described in, for example, Japanese Patent Laid-Open No. 59-140211, a method in which a copolymerization reaction is started between an entire amount of styrene and a part of 1,3-butadiene, and the rest of 1,3-butadiene is intermittently added during the copolymerization reaction can be employed.

A polymerization temperature employed in the polymerization step is preferably a temperature at which living anionic polymerization proceeds, and from the viewpoint of productivity, is more preferably 0°C or more, further preferably 120°C or less, and still further preferably 50°C or more and 100°C or less. When the temperature within such a temperature range is employed, a reaction amount of a modifier on an active terminal obtained after completing the polymerization tends to be able to be sufficiently ensured.

(Branching Step)

In the method for producing a rubber-like polymer of the present embodiment, a step of adjusting a branch number of the rubber-like polymer may be further performed.

An example of a method for increasing the branch number of the rubber-like polymer includes a method in which a compound derived from a vinyl-based monomer and containing an alkoxysilyl group and/or a halosilyl group, namely, a branching agent, is used.

When a branching agent is added during the polymerization step, and thereafter, a monomer is added to continue the polymerization reaction, a polymer chain branched at a branch point can be elongated. Thereafter, a modifier, a coupling agent or the like may be added to perform a modification process.

(Modification Step)

A modification step with the above-described coupling agent, or a modifier having a nitrogen atom-containing group is performed on an active terminal of a polymer obtained through the above-described polymerization step, and the branching step with a prescribed branching agent performed if necessary.

(Deactivating Agent, and Neutralizer)

In the method for producing a rubber-like polymer of the present embodiment, a deactivating agent, a neutralizer and the like may be added to the polymer solution if necessary after the modification step.

Examples of the deactivating agent include, but are not limited to, water; and alcohols such as methanol, ethanol, and isopropanol.

Examples of the neutralizer include, but are not limited to, carboxylic acids such as stearic acid, oleic acid, and versatic acid (carboxylic acid mixture having 9 to 11 carbon atoms, mainly 10 carbon atoms, and having many branches); an aqueous solution of an inorganic acid, and carbon dioxide gas.

(Hydrogenation Step)

The method for producing a rubber-like polymer of the present embodiment includes a hydrogenation step performed to achieve a hydrogenation rate of 90% or less.

The hydrogenation rate can be controlled by adjusting, for example, an amount of hydrogen used in hydrogenation, and a hydrogenation speed can be controlled by adjusting, for example, a hydrogen feed amount, a pressure, a temperature, and the like. The hydrogenation rate of a rubber-like polymer can be measured by proton nuclear magnetic resonance ($^1$H-NMR).

(Addition of Rubber Stabilizer)

In the method for producing a rubber-like polymer of the present embodiment, a rubber stabilizer is preferably added from the viewpoints of prevention of gel formation after the polymerization and improving stability in processing.

As the rubber stabilizer, any of known stabilizers, not limited to the following, can be used, and examples include antioxidants such as 2,6-di-tert-butyl-4-hydroxytoluene (hereinafter sometimes referred to as "BHT"), n-octadecyl-3-(4'-hydroxy-3',5'-di-tertbutylphenol) propionate, and 2-methyl-4,6-bis[(octylthio)methyl]phenol.

(Desolvation Step)

In the method for producing a rubber-like polymer of the present embodiment, as a method for obtaining the resultant polymer from the polymer solution, any of known methods can be employed. The method is not especially limited, and examples include a method in which the polymer is filtered after separating a solvent by steam stripping or the like, and the resultant is dehydrated and dried to obtain the polymer, a method in which the polymer solution is concentrated with a flushing tank, and the resultant is devolatilized with a vent extruder, and a method in which devolatilization is directly performed with a drum dryer or the like.

[Rubber Composition]

In a preferred aspect, a rubber composition of the present embodiment contains the rubber-like polymer of the present embodiment described above, and a crosslinking agent in an amount of 0.1 parts by mass or more and 20 parts by mass or less with respect to 100 parts by mass of a rubber component including the rubber-like polymer of the present embodiment.

It is noted that the rubber component refers to a component including the rubber-like polymer to be contained in the composition of the present embodiment, and conventionally known various additional rubbers that can be contained in the rubber composition of the present embodiment.

The additional rubbers are not especially limited but can be appropriately selected depending on purposes. Examples include a styrene-butadiene rubber (of emulsion polymerization tire or solution polymerization type), a natural rubber, polyisoprene, a butadiene rubber (high cis polybutadiene, low cis polybutadiene, syndiotactic-1,2-polybutadiene, an acrylonitrile-butadiene rubber (NBR), a chloroprene rubber, ethylene-$\alpha$-olefin copolymer rubbers such as an ethylene-propylene rubber (EPM), an ethylene-propylene-diene rubber (EPDM), a butyl rubber, a polysulfide rubber, a silicone rubber, a fluororubber, and a urethane rubber.

One of these additional rubbers may be used, or a mixture of two or more of these may be used. As a mixing method, these may be mixed in a dry state after the polymerization of the rubber-like polymer, or may be mixed in a solution state during the polymerization of the rubber-like polymer.

The crosslinking agent is not especially limited, and can be appropriately selected depending on purposes, and examples include a sulfur-based crosslinking agent, an organic peroxide-based crosslinking agent, an inorganic crosslinking agent, a polyamine crosslinking agent, a resin crosslinking agent, a sulfur compound-based crosslinking agent, and an oxime-nitrosamine-based crosslinking agent. One of these may be used, or two or more of these may be used together.

When the rubber composition of the present embodiment is used in a tire, a sulfur-based crosslinking agent (vulcanizing agent) is more preferred among these. In particular, sulfur is further preferred.

A content of the crosslinking agent in the rubber composition of the present embodiment is preferably 0.1 parts by mass or more and 20 parts by mass or less with respect to 100 parts by mass of the rubber component. The content is preferably 0.1 parts by mass or more, more preferably 0.5 parts by mass or more, and further preferably 1.5 parts by mass or more from the viewpoints of high tensile strength and a high crosslinking speed. On the other hand, from the viewpoints of inhibition of uneven crosslinking and high tensile strength, the content is preferably 20 parts by mass or less, more preferably 5 parts by mass or less, and further preferably 3 parts by mass or less.

In the rubber composition of the present embodiment, a vulcanizing agent may be contained, and a vulcanization accelerator may be further used together.

Examples of the vulcanization accelerator include, but are not limited to, guanidine-based, aldehyde-amine-based, aldehyde-ammonia-based, thiazole-based, sulfenamide-based, thiourea-based, thiuram-based, dithiocarbamate-based, and xanthate-based compounds.

The rubber composition of the present embodiment may contain various additives different from those described above, such as an additional softener, a filler, a heat stabilizer, an antistatic agent, a weathering stabilizer, an anti-aging agent, a colorant, and a lubricant.

As the additional softener, any of known softeners can be used.

Examples of the additional filler include, but are not limited to, calcium carbonate, magnesium carbonate, aluminum sulfate, and barium sulfate.

As the heat stabilizer, the antistatic agent, the weathering stabilizer, the anti-aging agent, the colorant, and the lubricant, any of known materials can be respectively used.

(Vulcanizate)

The rubber composition of the present embodiment is used suitably in the form of a vulcanizate.

The vulcanizate can be obtained by mixing, for example, the rubber-like polymer of the present embodiment with an inorganic filler such as silica or carbon black, a rubber component excluding the rubber-like polymer of the present embodiment, a silane coupling agent, a rubber softener, a wax, a vulcanizing agent, a vulcanization accelerator, and a vulcanization aid to obtain a rubber composition, and vulcanizing it by heating.

A method for identifying the type or a content ratio of the rubber component contained in the rubber composition of the present embodiment is not especially limited, and an example includes an identification method employing NMR.

For example, as described in a prior literature (JSR TECHNICAL REVIEW No. 126/2019), ratios of a styrene unit, a 1,2-vinyl bond content, 1,4-vinyl bond content, a 1,4-cis bond content, and an isoprene unit contained in a rubber composition can be quantitatively calculated by employing solid $^{13}C$-NMR.

(Silica)

The rubber composition of the present embodiment can contain silica.

A silica content of the rubber composition is preferably 30 parts by mass or more and 100 parts by mass of less with respect to 100 parts by mass of the rubber component including the rubber-like polymer of the present embodiment.

The silica content is preferably 60 parts by mass or more, more preferably 65 parts by mass or more, and further preferably 75 parts by mass or more with respect to 100 parts by mass of the rubber component from the viewpoint of improvement of grip performance and steering stability obtained when the rubber composition of the present embodiment is used in a tire. From the viewpoint of improvement of low fuel consumption performance obtained in use in a tire, the silica content is preferably 100 parts by mass or less, more preferably 90 parts by mass or less, and further preferably 80 parts by mass or less.

The silica is not especially limited, and any of known ones can be used, and it is preferably a solid particle containing $SiO_2$ or $Si_3Al$ as a constituent unit, and more preferably a solid particle containing $SiO_2$ or $Si_3Al$ as a principal component of a constituent element. Here, a principal component refers to a component contained in the silica in an amount of 50% by mass or more, preferably 70% by mass or more, and further preferably 80% by mass or more.

Examples of the silica include, but are not limited to, silicon dioxide, clay, talc, mica, diatomite, wollastonite, montmorillonite, zeolite, and inorganic fibrous substances such as glass fiber.

An example of commercially available silica includes trade name "Ultrasil 7000GR" manufactured by Evonik Degussa.

As the silica, a silica-based inorganic filler having a hydrophobized surface can be used, and the silica-based inorganic filler may be used together with a non-silica-based inorganic filler.

Among these, from the viewpoints of strength and abrasion resistance, silicon dioxide and glass fiber are preferred, and silicon dioxide is more preferred.

Examples of the silica include dry silica, wet silica, and synthetic silicate silica. Among these, wet silica is more preferred from the viewpoints of an improving effect of a fracture property, and excellent balance of wet grip performance.

When a silica-based inorganic filler is contained in the rubber composition of the present embodiment, from the viewpoint of obtaining practically favorable abrasion resistance and fracture property, a nitrogen adsorption specific surface area, obtained by the BET adsorption method, of the silica-based inorganic filler is preferably 100 $m^2/g$ or more and 300 $m^2/g$ or less, and more preferably 170 $m^2/g$ or more and 250 $m^2/g$ or less.

If necessary, a silica-based inorganic filler having a comparatively small specific surface area (for example, a specific surface area of less than 200 $m^2/g$) and a silica-based inorganic filler having a comparatively large specific surface area (of, for example 200 $m^2/g$ or more) can be used in combination. Thus, favorable abrasion resistance and fracture property can be highly balanced with a fuel saving property.

(Silane Coupling Agent)

The rubber composition of the present embodiment may contain a silane coupling agent from the viewpoints of improvement of dispersibility of a filler and improvement of tensile strength of a crosslinked product.

The silane coupling agent is preferably a compound having a function to make close interaction between a rubber component and an inorganic filler, having a group with affinity with or a binding property to each of the rubber component and the filler, and having, in one molecule, a sulfur bond portion and an alkoxysilyl group or silanol group portion.

Examples of such a compound include, but are not limited to, bis-[3-(triethoxysilyl)-propyl]-tetrasulfide, bis-[3-(triethoxysilyl)-propyl]-disulfide, bis-[2-(triethoxysilyl)-ethyl]-tetrasulfide, S-[3-(triethoxysilyl)propyl]octanethioate, a condensate of S-[3-(triethoxysilyl)-propyl]octanethioate and [(triethoxysilyl)-propyl]thiol, mercaptosilane having at least one thiol functional group (-SH), and a silane carrying at least one masked thiol group.

A content of the silane coupling agent in the rubber composition of the present embodiment is preferably 0.1 parts by mass or more, more preferably 0.5 parts by mass or more, and further preferably 1.0 part by mass or more with respect to 100 parts by mass of the rubber component including the rubber-like polymer of the present embodiment. The content is preferably 30 parts by mass or less, more preferably 20 parts by mass or less, and further preferably 15 parts by mass or less.
When the content of the silane coupling agent falls in the above-described range, the effect of adding the silane coupling agent tends to be further remarkably exhibited.

(Carbon Black)

The rubber composition of the present embodiment preferably contains 100 parts by mass of the rubber component including the rubber-like polymer of the present embodiment, and 1 part by mass or more and 100 parts by mass or less of carbon black.
The carbon black is not especially limited, and for example, carbon blacks of SRF, FEF, HAF, ISAF and SAF classes can be used. Among these, a carbon black having a nitrogen adsorption specific surface area of 50 $m^2$/g or more and dibutyl phthalate (DBP) oil absorption of 80 mL/100 g or more is preferably used from the viewpoints of extrusion moldability and a rolling resistance property.
A content of the carbon black is preferably 1 part by mass or more, more preferably 3 parts by mass or more, and further preferably 5 parts by mass or more with respect to 100 parts by mass of the rubber component from the viewpoint of improvement of abrasion resistance. The content is preferably 100 parts by mass or less, more preferably 50 parts by mass or less, and further preferably 20 parts by mass or less from the viewpoint of improvement of low fuel consumption performance.

(Softener)

The rubber composition of the present embodiment preferably contains 100 parts by mass of the rubber component including the rubber-like polymer of the present embodiment, and 1 part by mass or more and 60 parts by mass or less of a softener.
The softener is not especially limited, and examples include an extender oil, a low molecular weight rubber-like polymer, and a resin, and an extender oil is preferred from the viewpoints of processability, productivity, and economic performance. Besides, from the viewpoint of abrasion resistance of a rubber composition for use in a tire, a low molecular weight rubber-like polymer capable of contributing to crosslinking is preferred.
Preferable examples of the softener include, but are not limited to, an aromatic oil, a naphthenic oil, and a paraffin oil.
Among these, from the viewpoint of environmental safety, and from the viewpoints of oil bleed prevention and wet grip performance, an aroma substitute oil containing 3% by mass or less of polycyclic aromatic (PCA) component in accordance with the IP 346 method is preferred.
Examples of the aroma substitute oil include TDAE (treated distillate aromatic extract) and MES (mild extraction solvate) and the like described in Kautschuk Gummi Kunststoffe 52(12) 799 (1999) as well as RAE (residual aromatic extract).
A content of the softener in the rubber composition of the present embodiment is preferably 1 part by mass or more, more preferably 5 parts by mass or more, and further preferably 10 parts by mass or more with respect to 100 parts by mass of the rubber component from the viewpoint of processability. From the viewpoint of abrasion resistance, the content is preferably 60 parts by mass or less, more preferably 50 parts by mass or less, and further preferably 40 parts by mass or less.

(Method for Kneading Rubber Composition)

Examples of a method for mixing a rubber component including the rubber-like polymer of the present embodiment and an additional rubber, a crosslinking agent, silica, carbon black and another filler, a silane coupling agent, and additives such as a softener include, but are not limited to, a melt kneading method using a general mixer such as an open roll, a Banbury mixer, a kneader, a single screw extruder, a double screw extruder, or a multi-screw extruder, and a method in which the respective components are dissolved to be mixed, and then a solvent is removed by heating.
Among these methods, a melt kneading method using a roll, a Banbury mixer, a kneader, or an extruder is preferred from the viewpoints of productivity and favorable kneadability. Besides, either of a method in which the rubber component, a filler, a silane coupling agent, and an additive are kneaded all at once, and a method in which these are mixed dividedly plural times is applicable.

[Application]

The rubber component of the present embodiment is used, preferably in the form of a crosslinking rubber composition, in tire members, interiors and exteriors of vehicles, anti-vibration rubbers, belts, shoes, foam bodies, and various industrial products.
Among these, it is suitably used in tire members.
Examples of the tire members include various tires such as a fuel efficient tire, an all-season tire, a high performance tire, a snow tire, and a studless tire; and various portions of a tire such as a tire tread, a carcass, a sidewall, and a bead portion.
In particular, the rubber composition of the present embodiment is excellent in balance among abrasion resistance, low fuel consumption performance, wet grip performance, and snow performance when in the form of a vulcanizate, and hence is suitably used in a tire tread of a fuel efficient tire, a high performance tire, and a snow tire.
As a method for producing a tire, a known method can be employed. For example, at least one member usually used for production of a tire, such as a carcass layer, a belt layer, and a tread layer selected from the group consisting of a crosslinking rubber composition before vulcanization and a cord, are successively overlayed on a tire forming drum to adhere to one another, and the drum is pulled out to obtain a green tire. Subsequently, the green tire is vulcanized by heating by an ordinary method, and thus, a desired tire (such as a pneumatic tire) can be produced.

Examples

The present embodiment will now be described in more detail with reference to specific examples and comparative examples, and it is noted that the present embodiment is not limited by the following examples and comparative examples.
Various physical properties of the examples and comparative examples were measured by the following methods.

(Microstructure of Butadiene Portion (1,2-vinyl Bond Content) of Rubber-like Polymer before Hydrogenation)

50 mg of a rubber-like polymer before hydrogenation was dissolved in 10 mL of carbon disulfide to obtain a measurement sample.
An infrared spectrum was measured in a range of 600 to 1000 $cm^{-1}$ with a solution cell used, and based on an absorbance at a prescribed wavelength, a microstructure of a butadiene portion, namely, a 1,2-vinyl bond content (% by mol), was obtained in accordance with an equation of Hampton's method (a method described in R. R. Hampton, Analytical Chemistry 21, 923 (1949)) (measuring apparatus: Fourier transform infrared spectrophotometer "FT-IR230" manufactured by JASCO Corporation).

(Weight Average Molecular Weight of Rubber-like Polymer)

A chromatogram was measured with a GPC measuring apparatus including a series of three columns using a polystyrene-based gel as a filler, and a weight average molecular weight of a rubber-like polymer was obtained based on a calibration curve obtained using standard polystyrene.
As an eluent, THF (tetrahydrofuran) containing 5 mmol/L triethylamine was used.
As columns, a guard column: trade name "TSKguardcolumn Super H-H" manufactured by Tosoh Corporation, and columns: trade names "TSKgel Super H5000", "TSKgel Super H6000", and "TSKgel Super H7000" manufactured by Tosoh Corporation were used.
Under conditions of an oven temperature of 40°C and a THF flow rate of 0.6 mL/min, an RI detector (trade name "HLC8020" manufactured by Tosoh Corporation) was used.
A measurement solution was prepared by dissolving 10 mg of a measurement sample in 20 mL of THF, and 20 μL of the measurement solution was injected into the GPC measuring apparatus for measurement.

(Modification Ratio of Rubber-like Polymer)

A modification ratio of a rubber-like polymer was measured by column adsorption GPC as follows. The measurement was performed by utilizing a characteristic that a rubber-like polymer modified with a nitrogen atom-containing functional group adsorbs onto a column.
A sample solution containing a sample and low molecular weight internal standard polystyrene was measured for an amount of adsorption to a silica-based column based on a difference between a chromatogram measured with a polystyrene-based column and a chromatogram measured with the silica-based column, and thus, a modification ratio

was obtained.

Specifically, the measurement was performed as follows.

<Preparation of Sample Solution>:

A sample solution was obtained by dissolving 10 mg of a sample and 5 mg of standard polystyrene in 20 mL of THF.

THF containing 5 mmol/L triethylamine was used as an eluent, and 20 μL of the sample solution was injected into an apparatus for measurement. As columns, a guard column: trade name "TSKguardcolumn Super H-H" manufactured by Tosoh Corporation and columns: trade names "TSKgel Super H5000", "TSKgel Super H6000", and "TSKgel Super H7000" manufactured by Tosoh Corporation were used. Under conditions of an oven temperature of 40°C and a THF flow rate of 0.6 mL/min, an RI detector (trade name "HLC8020" manufactured by Tosoh Corporation) was used for the measurement to obtain a chromatogram.

<GPC Measurement Conditions Using Silica-based Column>:

An apparatus, trade name "HLC-8320GPC" manufactured by Tosoh Corporation was used, THF was used as an eluent, and 50 μL of a sample solution was injected into the apparatus. Under conditions of an oven temperature of 40°C and a THF flow rate of 0.5 mL/min, an RI detector was used to obtain a chromatogram. As columns, trade names "Zorbax PSM-1000S", "PSM-300S", and "PSM-60S" connected to one another were used, and a column, trade name "DIOL 4.6 x 12.5 mm 5 micron" was connected as a guard column at a previous stage.

<Calculation Method for Modification Ratio>:

A modification ratio (%) was obtained in accordance with the following expression assuming that a whole peak area of the chromatogram obtained with the polystyrene-based column is 100, that a peak area of the sample is P1, that a peak area of the standard polystyrene is P2, that a whole peak area of the chromatogram obtained with the silica-based column is 100, that a peak area of the sample is P3, and that a peak area of the standard polystyrene is P4:

$$\text{Modification ratio (\%)} = [1 - (P2 \times P3)/(P1 \times P4)] \times 100$$

(wherein P1 + P2 = P3 + P4 = 100)

(Silicon Content of Rubber-like Polymer)

A rubber-like polymer was used as a sample to measure a silicon content therein with an ICP mass analyzer (Agilnet 7700s manufactured by Agilent Technologies Japan, Ltd.).

(Hydrogenation Rate, and Contents C1, C2, C3, C4, and S of Rubber-like Polymer)

A large amount of methanol was added to a reaction solution of a rubber-like polymer after a hydrogenation reaction, and thus, a rubber-like polymer before hydrogenation and a hydrogenated rubber-like polymer were precipitated to be collected.

Subsequently, the hydrogenated rubber-like polymer was extracted with acetone, and the resultant hydrogenated rubber-like polymer was vacuum dried.

The resultant was used as a sample of $^1$H-NMR measurement to measure a hydrogenation rate, the contents C1, C2, C3 and C4 of the structures respectively represented by the formulas (1) to (4), and the content S of an aromatic vinyl monomer unit.

Conditions for the $^1$H-NMR measurement were as follows:

<Measurement Conditions>

Apparatus: JNM-LA400 (manufactured by JEOL Ltd.)
Solvent: deuterated chloroform
Measurement sample: substance sampled before and after hydrogenation of polymer
Sample concentration: 50 mg/mL

Observation frequency: 400 MHz
Chemical shift reference: TMS (tetramethylsilane)
Pulse delay: 2.904 sec
Number of scans: 64
Pulse width: 45°
Measurement temperature: 26°C

(Styrene Content (% by mass) in Rubber-like Polymer)

A rubber-like polymer was used as a sample, and 100 mg of the sample was dissolved and diluted to 100 mL with chloroform to obtain a measurement sample. Based on an amount of adsorption by a phenyl group of styrene at an ultraviolet adsorption wavelength (about 254 nm), a styrene content (% by mass) in the sample was measured (measuring apparatus: spectrophotometer "UV-2450" manufactured by Shimadzu Corporation).

(Nitrogen Content of Rubber-like Polymer)

A rubber-like polymer was used as a sample to measure a nitrogen content therein with a trace nitrogen analyzer (TN-2100H, Nittoseiko Analytech Co., Ltd.).

(Mooney Viscosity (ML) of Rubber-like Polymer)

A rubber-like polymer was used as a sample for performing measurement by a method described in ISO 289.
In Table 1, a value of a Mooney viscosity measured at 100°C is listed as ML.
Besides, Mw/(ML x 10,000) was calculated.

[Production of Rubber-like Polymer]

(Preparation of Hydrogenation Catalyst)

A hydrogenation catalyst used in preparing a rubber-like polymer in each of production examples described below was prepared by a method of the following production example α.

<Production Example α>

A nitrogen-purged reaction vessel was charged with 1 L of dried and purified cyclohexane, 100 mmol of bis(η5-cyclopentadienyl)titanium dichloride was added thereto, a n-hexane solution containing 200 mmol of trimethylaluminum was added thereto under sufficient stirring, and the resultant was reacted at room temperature for about 3 days to obtain a hydrogenation catalyst (TC-1).

(Polymerization of Rubber-like Polymer)

<(Example 1) Rubber-like Polymer A1>

A temperature-controllable autoclave having an internal capacity of 43 L and equipped with a stirrer and a jacket was used as a reactor, and was charged with 3,046 g of 1,3-butadiene, from which impurities had been precedently removed, 344.0 g of styrene, 25,800 g of cyclohexane, and 16.6 g of 2,2-di(2-tetrahydrofuryl)propane used as a polar compound, and the internal temperature of the reactor was kept at 42°C.
Subsequently, 3.7 g of n-butyllithium was supplied as a polymerization initiator to the reactor.
After starting a polymerization reaction, the temperature within the reactor started to increase due to heat generation through polymerization, and when the temperature increase stopped, 909.9 g of 1,3-butadiene was added as an additional portion.
When the temperature increase within the reactor caused by reaction heat of the additional portion of butadiene ended, 3.8 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.
Thereafter, to the thus obtained rubber-like polymer solution before hydrogenation, the hydrogenation catalyst (TC-1) prepared as described above in <Production Example α> was added in an amount, in terms of Ti, of 60 ppm per 100 parts by mass of the rubber-like polymer before hydrogenation, and a hydrogenation reaction was performed at a

hydrogen pressure of 0.8 MPa and an average temperature of 85°C for 50 minutes to obtain a rubber-like polymer A1.

The thus obtained rubber-like polymer A1 had a hydrogenation rate of 68 mol%.

To a solution of the rubber-like polymer thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer A1 are shown in Table 1.

<(Example 2) Rubber-like Polymer A2>

A rubber-like polymer A2 was obtained by employing the same production conditions as those employed in Example 1 except for the hydrogenation amount.

Analysis results of the rubber-like polymer A2 are shown in Table 1.

<(Example 3) Rubber-like Polymer A3>

The amount of 2,2-di(2-tetrahydrofuryl)propane used as the polar compound was changed to 7.5 g, and the hydrogenation amount was changed. A rubber-like polymer A3 was obtained by employing the other conditions the same as those employed in Example 1.

Analysis values of the rubber-like polymer A3 are shown in Table 1.

<(Example 4) Rubber-like Polymer A4>

A temperature-controllable autoclave having an internal capacity of 43 L and equipped with a stirrer and a jacket was used as a reactor, and was charged with 2,748 g of 1,3-butadiene, from which impurities had been precedently removed, 731.0 g of styrene, 25,800 g of cyclohexane, and 15.2 g of 2,2-di(2-tetrahydrofuryl)propane used as a polar compound, and the internal temperature of the reactor was kept at 42°C.

Subsequently, 3.7 g of n-butyllithium was supplied as a polymerization initiator to the reactor.

After starting a polymerization reaction, the temperature within the reactor started to increase due to heat generation through polymerization, and when the temperature increase stopped, 820.9 g of 1,3-butadiene was added as an additional portion.

When the temperature increase within the reactor caused by reaction heat of the additional portion of 1,3-butadiene ended, 3.8 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.

Thereafter, to the thus obtained rubber-like polymer solution before hydrogenation, the hydrogenation catalyst (TC-1) prepared as described above in <Production Example α> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer A4.

The thus obtained rubber-like polymer A4 had a hydrogenation rate of 68 mol%.

To a solution of the rubber-like polymer A4 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer A4 are shown in Table 1.

<(Example 5) Rubber-like Polymer A5>

A rubber-like polymer A5 was obtained by employing the same production conditions as those employed in Example 4 except for the hydrogenation amount.

Analysis results of the rubber-like polymer A5 are shown in Table 1.

<(Example 6) Rubber-like Polymer A6>

A temperature-controllable autoclave having an internal capacity of 43 L and equipped with a stirrer and a jacket was used as a reactor, and was charged with 2,483 g of 1,3-butadiene, from which impurities had been precedently removed, 1075.0 g of styrene, 25,800 g of cyclohexane, and 15.2 g of 2,2-di(2-tetrahydrofuryl)propane used as a polar compound, and the internal temperature of the reactor was kept at 42°C.

Subsequently, 3.7 g of n-butyllithium was supplied as a polymerization initiator to the reactor.

After starting a polymerization reaction, the temperature within the reactor started to increase due to heat generation through polymerization, and when the temperature increase stopped, 741.8 g of 1,3-butadiene was added as an additional portion.

When the temperature increase within the reactor caused by reaction heat of the additional portion of 1,3-butadiene ended, 3.8 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.
Thereafter, to the thus obtained rubber-like polymer solution before hydrogenation, the hydrogenation catalyst (TC-1) prepared as described above in <Production Example $\alpha$> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer A6.
The thus obtained rubber-like polymer A6 had a hydrogenation rate of 72 mol%.
To a solution of the rubber-like polymer A6 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.
Analysis results of the rubber-like polymer A6 are shown in Table 1.

<(Example 7) Rubber-like Polymer A7>

A rubber-like polymer A7 was obtained by employing the same production conditions as those employed in Example 6 except for the hydrogenation amount.
Analysis results of the rubber-like polymer A7 are shown in Table 1.

<(Example 8) Rubber-like Polymer A8>

A temperature-controllable autoclave having an internal capacity of 43 L and equipped with a stirrer and a jacket was used as a reactor, and was charged with 3,046 g of 1,3-butadiene, from which impurities had been precedently removed, 344.0 g of styrene, 25,800 g of cyclohexane, and 14.1 g of 2,2-di(2-tetrahydrofuryl)propane used as a polar compound, and the internal temperature of the reactor was kept at 42°C.
Subsequently, 3.1 g of n-butyllithium was supplied as a polymerization initiator to the reactor.
After starting a polymerization reaction, the temperature within the reactor started to increase due to heat generation through polymerization, and when the temperature increase stopped, 909.9 g of 1,3-butadiene was added as an additional portion.
When the temperature increase within the reactor caused by reaction heat of the additional portion of 1,3-butadiene ended, 3.3 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.
Thereafter, to the thus obtained rubber-like polymer solution before hydrogenation, the hydrogenation catalyst (TC-1) prepared as described above in <Production Example $\alpha$> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer A8.
The thus obtained rubber-like polymer A8 had a hydrogenation rate of 68 mol%.
To a solution of the rubber-like polymer A8 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.
Analysis results of the rubber-like polymer A8 are shown in Table 1.

<(Example 9) Rubber-like Polymer A9>

A temperature-controllable autoclave having an internal capacity of 43 L and equipped with a stirrer and a jacket was used as a reactor, and was charged with 3,046 g of 1,3-butadiene, from which impurities had been precedently removed, 344.0 g of styrene, 25,800 g of cyclohexane, and 20.5 g of 2,2-di(2-tetrahydrofuryl)propane used as a polar compound, and the internal temperature of the reactor was kept at 42°C.
Subsequently, 4.6 g of n-butyllithium was supplied as a polymerization initiator to the reactor.
After starting a polymerization reaction, the temperature within the reactor started to increase due to heat generation through polymerization, and when the temperature increase stopped, 909.9 g of 1,3-butadiene was added as an additional portion.
When the temperature increase within the reactor caused by reaction heat of the additional portion of 1,3-butadiene ended, 4.9 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.
Thereafter, to the thus obtained rubber-like polymer solution before hydrogenation, the hydrogenation catalyst (TC-1) prepared as described above in <Production Example $\alpha$> was added in an amount, in terms of Ti, of 60 ppm per 100

parts by mass of the rubber-like polymer before hydrogenation, and a hydrogenation reaction was performed at a hydrogen pressure of 0.8 MPa and an average temperature of 85°C for 50 minutes to obtain a rubber-like polymer A9.

The thus obtained rubber-like polymer A9 had a hydrogenation rate of 68 mol%.

To a solution of the rubber-like polymer A9 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer A9 are shown in Table 1.

<(Example 10) Rubber-like Polymer A10>

A temperature-controllable autoclave having an internal capacity of 43 L and equipped with a stirrer and a jacket was used as a reactor, and was charged with 3,046 g of 1,3-butadiene, from which impurities had been precedently removed, 344.0 g of styrene, 25,800 g of cyclohexane, and 11.0 g of 2,2-di(2-tetrahydrofuryl)propane used as a polar compound, and the internal temperature of the reactor was kept at 42°C.

Subsequently, 2.4 g of n-butyllithium was supplied as a polymerization initiator to the reactor.

After starting a polymerization reaction, the temperature within the reactor started to increase due to heat generation through polymerization, and when the temperature increase stopped, 909.9 g of 1,3-butadiene was added as an additional portion.

When the temperature increase within the reactor caused by reaction heat of the additional portion of 1,3-butadiene ended, 2.6 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.

Thereafter, to the thus obtained rubber-like polymer solution before hydrogenation, the hydrogenation catalyst (TC-1) prepared as described above in <Production Example $\alpha$> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer A10.

The thus obtained rubber-like polymer A10 had a hydrogenation rate of 69 mol%.

To a solution of the rubber-like polymer A10 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer A10 are shown in Table 1.

<(Example 11) Rubber-like Polymer A11>

A temperature-controllable autoclave having an internal capacity of 43 L and equipped with a stirrer and a jacket was used as a reactor, and was charged with 3,046 g of 1,3-butadiene, from which impurities had been precedently removed, 344.0 g of styrene, 25,800 g of cyclohexane, and 12.9 g of 2,2-di(2-tetrahydrofuryl)propane used as a polar compound, and the internal temperature of the reactor was kept at 42°C.

Subsequently, 2.9 g of n-butyllithium was supplied as a polymerization initiator to the reactor.

After starting a polymerization reaction, the temperature within the reactor started to increase due to heat generation through polymerization, and when the temperature increase stopped, 909.9 g of 1,3-butadiene was added as an additional portion.

When the temperature increase within the reactor caused by reaction heat of the additional portion of 1,3-butadiene ended, 2.1 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.

Thereafter, to the thus obtained rubber-like polymer solution before hydrogenation, the hydrogenation catalyst (TC-1) prepared as described above in <Production Example $\alpha$> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer A11.

The thus obtained rubber-like polymer A11 had a hydrogenation rate of 68 mol%.

To a solution of the rubber-like polymer A11 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer A11 are shown in Table 1.

<(Example 12) Rubber-like Polymer A12>

A temperature-controllable autoclave having an internal capacity of 43 L and equipped with a stirrer and a jacket was used as a reactor, and was charged with 3,046 g of 1,3-butadiene, from which impurities had been precedently removed, 344.0 g of styrene, 25,800 g of cyclohexane, and 9.5 g of 2,2-di(2-tetrahydrofuryl)propane used as a polar

compound, and the internal temperature of the reactor was kept at 42°C.

Subsequently, 2.1 g of n-butyllithium was supplied as a polymerization initiator to the reactor.

After starting a polymerization reaction, the temperature within the reactor started to increase due to heat generation through polymerization, and when the temperature increase stopped, 909.9 g of 1,3-butadiene was added as an additional portion.

When the temperature increase within the reactor caused by reaction heat of the additional portion of 1,3-butadiene ended, 2.2 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.

Thereafter, to the thus obtained rubber-like polymer solution before hydrogenation, the hydrogenation catalyst (TC-1) prepared as described above in <Production Example $\alpha$> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer A12.

The thus obtained rubber-like polymer A12 had a hydrogenation rate of 69 mol%.

To a solution of the rubber-like polymer A12 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer A12 are shown in Table 1.

<(Comparative Example 1) Rubber-like Polymer B1>

A rubber-like polymer B1 was obtained by employing the same production conditions as those employed in Example 1 except for the hydrogenation amount.

Analysis results of the rubber-like polymer B1 are shown in Table 2.

<(Comparative Example 2) Rubber-like Polymer B2>

A temperature-controllable autoclave having an internal capacity of 43 L and equipped with a stirrer and a jacket was used as a reactor, and was charged with 3,112 g of 1,3-butadiene, from which impurities had been precedently removed, 258.0 g of styrene, 25,800 g of cyclohexane, and 16.7 g of 2,2-di(2-tetrahydrofuryl)propane used as a polar compound, and the internal temperature of the reactor was kept at 42°C.

Subsequently, 3.8 g of n-butyllithium was supplied as a polymerization initiator to the reactor.

After starting a polymerization reaction, the temperature within the reactor started to increase due to heat generation through polymerization, and when the temperature increase stopped, 929.7 g of 1,3-butadiene was added as an additional portion.

When the temperature increase within the reactor caused by reaction heat of the additional portion of 1,3-butadiene ended, 4.0 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.

Thereafter, to the thus obtained rubber-like polymer solution before hydrogenation, the hydrogenation catalyst (TC-1) prepared as described above in <Production Example $\alpha$> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer B2.

The thus obtained rubber-like polymer B2 had a hydrogenation rate of 68 mol%.

To a solution of the rubber-like polymer B2 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer B2 are shown in Table 2.

<(Comparative Example 3) Rubber-like Polymer B3>

A temperature-controllable autoclave having an internal capacity of 43 L and equipped with a stirrer and a jacket was used as a reactor, and was charged with 2,318 g of 1,3-butadiene, from which impurities had been precedently removed, 1290.0 g of styrene, 25,800 g of cyclohexane, and 8.7 g of 2,2-di(2-tetrahydrofuryl)propane used as a polar compound, and the internal temperature of the reactor was kept at 42°C.

Subsequently, 3.1 g of n-butyllithium was supplied as a polymerization initiator to the reactor.

After starting a polymerization reaction, the temperature within the reactor started to increase due to heat generation through polymerization, and when the temperature increase stopped, 692.3 g of 1,3-butadiene was added as an additional portion.

When the temperature increase within the reactor caused by reaction heat of the additional portion of 1,3-butadiene ended, 3.3 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.

Thereafter, to the thus obtained rubber-like polymer solution before hydrogenation, the hydrogenation catalyst (TC-1) prepared as described above in <Production Example α> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer B3.

The thus obtained rubber-like polymer B3 had a hydrogenation rate of 55 mol%.

To a solution of the rubber-like polymer B3 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer B3 are shown in Table 2.

<(Comparative Example 4) Rubber-like Polymer B4>

A temperature-controllable autoclave having an internal capacity of 43 L and equipped with a stirrer and a jacket was used as a reactor, and was charged with 3,046 g of 1,3-butadiene, from which impurities had been precedently removed, 344.0 g of styrene, 25,800 g of cyclohexane, and 4.1 g of 2,2-di(2-tetrahydrofuryl)propane used as a polar compound, and the internal temperature of the reactor was kept at 42°C.

Subsequently, 3.7 g of n-butyllithium was supplied as a polymerization initiator to the reactor.

After starting a polymerization reaction, the temperature within the reactor started to increase due to heat generation through polymerization, and when the temperature increase stopped, 909.9 g of 1,3-butadiene was added as an additional portion.

When the temperature increase within the reactor caused by reaction heat of the additional portion of 1,3-butadiene ended, 4.0 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.

Thereafter, to the thus obtained rubber-like polymer solution before hydrogenation, the hydrogenation catalyst (TC-1) prepared as described above in <Production Example α> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer B4.

The thus obtained rubber-like polymer B4 had a hydrogenation rate of 37 mol%.

To a solution of the rubber-like polymer B4 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer B4 are shown in Table 2.

<(Comparative Example 5) Rubber-like Polymer B5>

A rubber-like polymer B5 was obtained in the same manner as in Example 9 except that the amount of 2,2-di(2-tetrahydrofuryl)propane added as a polar compound was changed to 23.1 g, that the amount of n-butyllithium added as a polymerization initiator was changed to 5.1 g, the amount of the modifier added was changed to 5.5 g, and that the hydrogenation amount was changed.

Analysis results of the rubber-like polymer B5 are shown in Table 2.

<(Comparative Example 6) Rubber-like Polymer B6>

A temperature-controllable autoclave having an internal capacity of 43 L and equipped with a stirrer and a jacket was used as a reactor, and was charged with 3,046 g of 1,3-butadiene, from which impurities had been precedently removed, 344.0 g of styrene, 25,800 g of cyclohexane, and 16.6 g of 2,2-di(2-tetrahydrofuryl)propane used as a polar compound, and the internal temperature of the reactor was kept at 42°C.

Subsequently, 3.7 g of n-butyllithium was supplied as a polymerization initiator to the reactor.

After starting a polymerization reaction, the temperature within the reactor started to increase due to heat generation through polymerization, and when the temperature increase stopped, 909.9 g of 1,3-butadiene was added as an additional portion.

When the temperature increase within the reactor caused by reaction heat of the additional portion of 1,3-butadiene ended, 2.2 g of silicon tetrachloride used as a coupling agent was added to the reactor, followed by stirring for 5 minutes. A part of the thus obtained polymer solution was extracted and dried to obtain a rubber-like polymer before hydrogenation.

Thereafter, to the thus obtained rubber-like polymer solution before hydrogenation, the hydrogenation catalyst

(TC-1) prepared as described above in <Production Example α> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer B6.

The thus obtained rubber-like polymer B6 had a hydrogenation rate of 68 mol%.

To a solution of the rubber-like polymer B6 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer B6 are shown in Table 2.

<(Comparative Example 7) Rubber-like Polymer B7>

A rubber-like polymer B7 was obtained by employing the same production conditions as those employed in Example 1 except for the hydrogenation amount.

Analysis results of the rubber-like polymer B7 are shown in Table 2.

<(Comparative Example 8) Rubber-like Polymer B8>

A temperature-controllable autoclave having an internal capacity of 43 L and equipped with a stirrer and a jacket was used as a reactor, and was charged with 2,318 g of 1,3-butadiene, from which impurities had been precedently removed, 1290 g of styrene, 25,800 g of cyclohexane, and 9.5 g of 2,2-di(2-tetrahydrofuryl)propane used as a polar compound, and the internal temperature of the reactor was kept at 42°C.

Subsequently, 3.0 g of n-butyllithium was supplied as a polymerization initiator to the reactor.

After starting a polymerization reaction, the temperature within the reactor started to increase due to heat generation through polymerization, and when the temperature increase stopped, 692.3 g of 1,3-butadiene was added as an additional portion.

When the temperature increase within the reactor caused by reaction heat of the additional portion of 1,3-butadiene ended, 3.2 g of 2,2-dimethoxy-1-(3-(trimethoxysilyl)propyl)-1,2-azasilolidine used as a modifier was added to the reactor, followed by stirring for 5 minutes. A part of the thus obtained polymer solution was extracted and dried to obtain a rubber-like polymer before hydrogenation.

Thereafter, to the thus obtained rubber-like polymer solution before hydrogenation, the hydrogenation catalyst (TC-1) prepared as described above in <Production Example α> was added in an amount, in terms of Ti, of 60 ppm per 100 parts by mass of the rubber-like polymer before hydrogenation, and a hydrogenation reaction was performed at a hydrogen pressure of 0.8 MPa and an average temperature of 85°C for 50 minutes to obtain a rubber-like polymer B8.

The thus obtained rubber-like polymer B8 had a hydrogenation rate of 90 mol%.

To a solution of the rubber-like polymer B8 thus obtained, 12.6 g of n-octadecyl-3-(3,5-di-t-butyl-4-hydroxyphenyl)-propionate and 3.0 g of 4,6-bis(octylthiomethyl)-o-cresol were added as antioxidants.

Analysis results of the rubber-like polymer B8 are shown in Table 2.

[Table 1]

| | Items | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Synthesis Conditions | Type of Random Copolymer | A1 | A2 | A3 | A4 | A5 | A6 | A7 | A8 | A9 | A10 | A11 | A12 |
| | Cyclohexane (g) | 25800 | 25800 | 25800 | 25800 | 25800 | 25800 | 25800 | 25800 | 25800 | 25800 | 25800 | 25800 |
| | 2,2-Di(2-tetrahydrofuryl)propane (g) | 16.6 | 16.6 | 7.5 | 15.2 | 15.2 | 15.2 | 15.2 | 14.1 | 20.5 | 11.0 | 12.9 | 9.5 |
| | Styrene (g) | 344.0 | 344.0 | 344.0 | 731.0 | 731.0 | 1075.0 | 1075.0 | 344.0 | 344.0 | 344.0 | 344.0 | 344.0 |
| | Butadiene (g) | 3046 | 3046 | 3046 | 2748 | 2748 | 2483 | 2483 | 3046 | 3046 | 3046 | 3046 | 3046.1 |
| | Additional Butadiene (g) | 909.9 | 909.9 | 909.9 | 820.9 | 820.9 | 741.8 | 741.8 | 909.9 | 909.9 | 909.9 | 909.9 | 909.9 |
| | n-Butyllithium (g) | 3.7 | 3.7 | 3.7 | 3.7 | 3.7 | 3.7 | 3.7 | 3.1 | 4.6 | 2.4 | 2.9 | 2.1 |
| | Modifier (g) | 3.8 | 3.8 | 3.8 | 3.8 | 3.8 | 3.8 | 3.8 | 3.3 | 4.9 | 2.6 | 2.1 | 2.2 |
| | Hydrogenation Catalyst (ppm, Ti vs. polymer) | 60.0 | 60.0 | 60.0 | 60.0 | 60.0 | 60.0 | 60.0 | 60.0 | 60.0 | 60.0 | 60.0 | 60.0 |
| Physical Properties | Styrene Content (wt%) | 8.1 | 8.0 | 8.0 | 17.2 | 17.1 | 25.1 | 25.3 | 7.9 | 7.9 | 8.0 | 8.1 | 8.0 |
| | 1,2-Vinyl Bond Content (mol% in butadiene) | 60.2 | 60.4 | 43.3 | 60.1 | 59.7 | 60.0 | 59.9 | 60.2 | 59.2 | 59.6 | 59.7 | 59.6 |
| | Hydrogenation Rate (mol%) | 68 | 84 | 49 | 68 | 80 | 72 | 80 | 68 | 68 | 69 | 68 | 69.0 |
| | S(mol %) | 4.3 | 4.3 | 4.3 | 9.6 | 9.6 | 14.8 | 14.8 | 4.3 | 4.3 | 4.3 | 4.4 | 4.3 |
| | C1(mol %) | 0.0 | 0.0 | 0.0 | 0.0 | 0.0 | 0.0 | 0.0 | 0.0 | 0.0 | 0.0 | 0.0 | 0.0 |
| | C2(mol %) | 57.4 | 57.4 | 41.1 | 54.2 | 54.2 | 51.1 | 51.1 | 57.4 | 56.7 | 57.0 | 57.1 | 57.0 |
| | Total of C1 and C2 (mol%) | 57.4 | 57.4 | 41.1 | 54.2 | 54.2 | 51.1 | 51.1 | 57.4 | 56.7 | 57.0 | 57.1 | 57.0 |

(continued)

| | Items | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| | C3(mol %) | 30.6 | 15.3 | 49.1 | 28.9 | 18.1 | 23.9 | 17.0 | 30.6 | 31.2 | 30.9 | 30.8 | 30.9 |
| | C4(mol %) | 7.7 | 23.0 | 5.5 | 7.2 | 18.1 | 10.2 | 17.0 | 7.7 | 7.8 | 7.7 | 7.7 | 7.7 |
| | Weight Average Molecular Weight (Mw(x$10^4$ g/mol) | 37.8 | 38.0 | 37.5 | 37.2 | 38.5 | 37.8 | 37.5 | 44.3 | 30.6 | 57.2 | 35.4 | 66.0 |
| | Silicon Content (ppm) | 157.9 | 164.1 | 168.8 | 156.1 | 150.9 | 144.7 | 145.8 | 140.8 | 204.1 | 109.1 | 87.5 | 94.4 |
| | Nitrogen Content (ppm) | 39.5 | 41.0 | 42.2 | 39.0 | 37.7 | 36.2 | 36.5 | 35.2 | 51.0 | 27.3 | 21.9 | 23.6 |
| | Modification Ratio (mass%) | 75 | 78 | 75 | 77 | 80 | 79 | 78 | 77 | 78 | 87 | 61 | 86 |
| | ML | 45 | 55 | 33 | 43 | 52 | 46 | 50 | 53 | 36 | 68 | 42 | 85 |
| | Mw/ (ML×10000) | 0.84 | 0.69 | 1.13 | 0.87 | 0.74 | 0.83 | 0.75 | 0.84 | 0.85 | 0.85 | 0.84 | 0.78 |

[Table 2]

| | Items | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Synthesis Conditions | Type of Random Copolymer | B1 | B2 | B3 | B4 | B5 | B6 | B7 | B8 |
| | Cyclohexane (g) | 25800 | 25800 | 25800 | 25800 | 25800 | 25800 | 25800 | 25800 |
| | 2,2-Di(2-tetrahydrofuryl)propane (g) | 16.6 | 16.7 | 8.7 | 4.1 | 23.1 | 16.7 | 16.6 | 3.2 |
| | Styrene (g) | 344.0 | 258.0 | 1290.0 | 344.0 | 344.0 | 344.0 | 344.0 | 1290.0 |
| | Butadiene (g) | 3046 | 3112 | 2318 | 3046 | 3046 | 3046 | 3046 | 2317.7 |
| | Additional Butadiene (g) | 909.9 | 929.7 | 692.3 | 909.9 | 909.9 | 909.9 | 909.9 | 692.3 |
| | n-Butyllithium (g) | 3.7 | 3.8 | 3.1 | 3.7 | 5.1 | 3.7 | 3.7 | 3.0 |
| | Modifier (g) | 3.8 | 4.0 | 3.3 | 4.0 | 5.5 | 2.2 | 3.8 | 3.2 |
| | Hydrogenation Catalyst (ppm, Ti vs. polymer) | 60.0 | 60.0 | 60.0 | 60.0 | 60.0 | 60.0 | 60.0 | 60.0 |
| Physical Properties | Styrene Content (wt%) | 7.8 | 6.3 | 30.4 | 8.4 | 8.0 | 8.2 | 8.1 | 30.1 |
| | 1,2-Vinyl Bond Content (mol% in butadiene) | 59.6 | 59.8 | 50.4 | 30.1 | 60.4 | 59.9 | 60.3 | 29.8 |
| | Hydrogenation Rate (mol%) | 88 | 68 | 55 | 37 | 68 | 68 | 18 | 90.0 |
| | S(mol %) | 4.3 | 3.2 | 18.2 | 4.3 | 4.3 | 4.3 | 4.3 | 18.2 |
| | C1(mol %) | 0.0 | 0.0 | 0.0 | 0.0 | 0.0 | 0.0 | 40.2 | 0.0 |
| | C2(mol %) | 57.4 | 58.1 | 40.9 | 28.7 | 57.4 | 57.4 | 17.2 | 24.5 |
| | Total of C1 and C2 (mol%) | 57.4 | 58.1 | 40.9 | 28.7 | 57.4 | 57.4 | 57.4 | 24.5 |

(continued)

| | Items | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| | C3(mol %) | 11.5 | 31.0 | 36.8 | 60.3 | 30.6 | 30.6 | 38.3 | 11.5 |
| | C4(mol %) | 26.8 | 7.7 | 4.1 | 6.7 | 7.7 | 7.7 | 0.0 | 45.8 |
| | Weight Average Molecular Weight (Mw(x$10^4$ g/mol) | 37.5 | 37.8 | 38.0 | 37.2 | 27.2 | 37.5 | 37.5 | 40.0 |
| | Silicon Content (ppm) | 166.7 | 168.2 | 139.2 | 171.8 | 229.9 | 151.7 | 188.4 | 133.5 |
| | Nitrogen Content (ppm) | 41.7 | 42.1 | 34.8 | 42.9 | 57.5 | 0.0 | 47.1 | 33.4 |
| | Modification Ratio (mass%) | 78 | 79 | 80 | 81 | 82 | 0 | 84 | 85 |
| | ML | 57 | 46 | 35 | 26 | 32 | 45 | 14 | 80 |
| | Mw/ (ML×10000) | 0.66 | 0.83 | 1.07 | 1.42 | 0.84 | 0.84 | 2.65 | 0.50 |

[Examples 1 to 36], [Comparative Examples 9 to 16], and [Reference Example]

(Preparation of Crosslinking Rubber Composition, and Evaluation of Physical Properties)

As shown in Table 1 and Table 2, the rubber-like polymers A1 to A12 obtained in Examples 1 to 12, the rubber-like polymers B1 to B8 obtained in Comparative Examples 1 to 8, and Y031 manufactured by Asahi Kasei Corporation (styrene content: 25% by mass, 1,2-vinyl bond content: 58 mol% in butadiene) were used as raw material rubbers to obtain crosslinking rubber compositions respectively containing the raw material rubbers in accordance with compositions described below.
Compounding conditions were as follows.

(Compounding Conditions)

An amount of each compounding agent shown in Tables 3 to 5 is shown in a unit of parts by mass with respect to 100 parts by mass of a rubber component excluding a rubber softener.

- Each of rubber compositions A1 to A12, B1 to B8, and Y031: 100.0 parts by mass
- Silica 1: VN3 manufactured by Evonik Degussa (N2SA: 175 $m^2/g$)
- Silica 2: 115GR manufactured by Solvay Japan (N2SA: 115 $m^2/g$)
- Silica 3: 9000GR manufactured by Evonik Degussa (N2SA: 235 $m^2/g$)
- Carbon 1: Diablack N339 manufactured by Mitsubishi Chemical Corporation (N2SA: 96 $m^2/g$, DBP absorption: 124 mL/100 g)
- Carbon 2: Showblack N330 manufactured by Cabot Japan (N2SA: 75 $m^2/g$)
- Softener 1: Diana Process AH-24 manufactured by Idemitsu Kosan Co., Ltd. (aroma oil)
- Softener 2: PS-32 manufactured by Idemitsu Kosan Co., Ltd. (mineral oil)
- Softener 3: SYLVARES SA85 manufactured by Arizona Chemical Company, LLC ($\alpha$ methylstyrene-based resin (copolymer of $\alpha$-methylstyrene and styrene), softening point: 85°C)
- Softener 4: NOVARES C100 manufactured by Rutgers Chemicals (coumarone-indene resin, softening point: 95 to 105°C)
- Softener 5: Kuraprene LIR30 manufactured by Kuraray Co., Ltd. (liquid IR, weight average molecular weight: 29,000)
- Softener 6: Sylvatraxx 4150 manufactured by KRATON (polyterpene resin, softening point: 150°C)
- Softener 7: RICON 100 manufactured by Sartomer Company, Inc. (liquid SBR, styrene content: 20% by mass, vinyl content: 70% by mass, weight average molecular weight: 4,500)
- Softener 8: Dercolyte L120 manufactured by DRT (polylimonene resin, softening point: 120°C)
- Silane coupling agent 1: Si266 manufactured by Evonik Degussa
- Silane coupling agent 2: Si69 manufactured by Evonik Degussa
- Silane coupling agent 3: Si363 manufactured by Evonik Degussa
- Anti-aging agent: Nocrac 6C manufactured by Ouchi Shinko Chemical Industrial Co., Ltd.
- Stearic acid: beads stearic acid "Tsubaki" manufactured by NOF Corporation
- Zinc oxide: three types of zinc oxides manufactured by HAKUSUI TECH.
- Wax: OZOACE 0355 manufactured by Nippon Seiro Co., Ltd.
- Sulfur: sulfur powder manufactured by Tsurumi Chemical Industry Co., Ltd.
- Vulcanization accelerator 1: vulcanization accelerator: NOCCELER CZ manufactured by Ouchi Shinko Chemical Industrial Co., Ltd.
- Vulcanization accelerator 2: NOCCELER D manufactured by Ouchi Shinko Chemical Industrial Co., Ltd.

(Kneading Method, and Evaluation of Moldability of Rubber Composition)

The above-described materials were kneaded by the following method to obtain a crosslinking rubber composition.
In accordance with compositions shown in Tables 3 to 5, rubber compositions of examples and comparative examples were prepared.
A closed kneader (having an internal capacity of 0.3 L) equipped with a temperature controller was used to knead, as first stage kneading, each of the rubber component, the silica, the carbon black, the silane coupling agent, the softener, the zinc oxide, and the stearic acid under conditions of a filling rate of 65% and a rotor speed of 30 to 50 rpm.
At this point, the temperature of the closed kneader was controlled to obtain the rubber composition (compound) at a discharge temperature of 155 to 160°C.
Next, as second stage kneading, after the compound obtained as described above was cooled to room

temperature, the anti-aging agent was added thereto, and the resultant was kneaded again for improving dispersibility of the silica. Also in this case, the discharge temperature of the compound was adjusted to 155 to 160°C by the temperature control of the kneader.

After cooling the resultant, as third stage kneading, the resultant was kneaded with the sulfur and the vulcanization accelerators 1 and 2 added thereto with an open roll set to 70°C. After the kneading, moldability of the rubber composition was evaluated based on sheet surface roughness of the crosslinking rubber composition discharged from the open roll.

Thereafter, the resultant was molded, and vulcanized with a vulcanization press at 160°C, and the thus vulcanized rubber composition was evaluated.

A vulcanization time was set to a value obtained by adding 5 minutes to T90 (min) of the corresponding sample measured by a method described below.

Specifically, the evaluation was made as follows. Evaluation results are shown in Tables 3 to 5.

<Evaluation 1: Vulcanization Rate of Rubber Composition>

A vulcanization rate of a rubber composition was evaluated by measuring a vulcanization time T90 (min) in accordance with ISO 6502 with MDR3000 manufactured by Montech.

In Tables 3 to 5, results are expressed as indexes by assuming that T90 of Reference Example was 100, and evaluated in accordance with the following guidelines:

◦: An index of the vulcanization rate of the rubber composition is 95 or more.
△: An index of the vulcanization rate of the rubber composition is 80 or more and less than 95.
×: An index of the vulcanization rate of the rubber composition is less than 80.

<Evaluation 2: Low Fuel Consumption Performance of Rubber Composition>

A viscosity tester "ARES" manufactured by Rheometric Scientific was used to measure a viscosity parameter in a twist mode. A tan δ measured at 50°C, a frequency of 10 Hz, and a strain of 3% was used as an index of low fuel consumption performance, and was expressed as an index by assuming that a low fuel consumption rate of Reference Example was 100, and evaluated in accordance with the following guidelines:

◎: An index of low fuel consumption performance of a vulcanizate is 110 or more.
○: An index of low fuel consumption performance of a vulcanizate is 105 or more and less than 110.
△: An index of low fuel consumption performance of a vulcanizate is 95 or more and less than 105.
×: An index of low fuel consumption performance of a vulcanizate is less than 95.

<Evaluation 3: Tensile Strength>

Tensile strength was measured in accordance with a tensile test method of JIS K6251.

In Tables 3 to 5, results are expressed as indexes by assuming that tensile strength of Reference Example was 100, and evaluated in accordance with the following guidelines:

◎: An index of tensile strength of a vulcanizate is 110 or more.
◦: An index of tensile strength of a vulcanizate is 105 or more and less than 110.
△: An index of tensile strength of a vulcanizate is 95 or more and less than 105.
×: An index of tensile strength of a vulcanizate is less than 95.

<Evaluation 4 Tear Strength>

Tear strength was measured in accordance with Test Method A, a method using a trouser test piece of JIS K6252.

In Tables 3 to 5, results are expressed as indexes by assuming that tear strength of Reference Example was 100, and evaluated in accordance with the following guidelines:

◎: An index of tear strength of a vulcanizate is 110 or more.
◦: An index of tear strength of a vulcanizate is 105 or more and less than 110.
△: An index of tear strength of a vulcanizate is 95 or more and less than 105.
×: An index of tear strength of a vulcanizate is less than 95.

[Table 3]

| | | | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|
| Composition | Rubber-like Polymer | type | A1 | A2 | A3 | A4 | A5 | A6 | A7 | A8 | A9 | A10 | A11 | A12 |
| | | [phr] | 100 | 100 | 100 | 100 | 100 | 100 | 100 | 100 | 100 | 100 | 100 | 100 |
| | Silica 1 | [phr] | 70 | 70 | 70 | 70 | 70 | 70 | 70 | 70 | 70 | 70 | 70 | 70 |
| | Silica 2 | [phr] | | | | | | | | | | | | |
| | Silica 3 | [phr] | | | | | | | | | | | | |
| | Carbon Black 1 | [phr] | 5 | 5 | 5 | 5 | 5 | 5 | 5 | 5 | 5 | 5 | 5 | 5 |
| | Carbon Black 2 | [phr] | | | | | | | | | | | | |
| | Softener 1 | [phr] | 35 | 35 | 35 | 35 | 35 | 35 | 35 | 35 | 35 | 35 | 35 | 35 |
| | Softener 2 | [phr] | | | | | | | | | | | | |
| | Softener 3 | [phr] | | | | | | | | | | | | |
| | Softener 4 | [phr] | | | | | | | | | | | | |
| | Softener 5 | [phr] | | | | | | | | | | | | |
| | Softener 6 | [phr] | | | | | | | | | | | | |
| | Softener 7 | [phr] | | | | | | | | | | | | |
| | Softener 8 | [phr] | | | | | | | | | | | | |
| | Silane Coupling Agent 1 | [phr] | 5.6 | 5.6 | 5.6 | 5.6 | 5.6 | 5.6 | 5.6 | 5.6 | 5.6 | 5.6 | 5.6 | 5.6 |
| | Silane Coupling Agent 2 | [phr] | | | | | | | | | | | | |
| | Silane Coupling Agent 3 | [phr] | | | | | | | | | | | | |
| | Zinc Oxide | [phr] | 2.5 | 2.5 | 2.5 | 2.5 | 2.5 | 2.5 | 2.5 | 2.5 | 2.5 | 2.5 | 2.5 | 2.5 |
| | Stearic Acid | [phr] | 2 | 2 | 2 | 2 | 2 | 2 | 2 | 2 | 2 | 2 | 2 | 2 |
| | Wax | [phr] | 1 | 1 | 1 | 1 | 1 | 1 | 1 | 1 | 1 | 1 | 1 | 1 |
| | Angi-aging Agent | [phr] | 1.5 | 1.5 | 1.5 | 1.5 | 1.5 | 1.5 | 1.5 | 1.5 | 1.5 | 1.5 | 1.5 | 1.5 |

(continued)

| | | | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|
| | Sulfur | [phr] | 1.5 | 1.5 | 1.5 | 1.5 | 1.5 | 1.5 | 1.5 | 1.5 | 1.5 | 1.5 | 1.5 | 1.5 |
| | Vulcanization Accelerator 1 | [phr] | 2 | 2 | 2 | 2 | 2 | 2 | 2 | 2 | 2 | 2 | 2 | 2 |
| | Vulcanization Accelerator 2 | [phr] | 1 | 1 | 1 | 1 | 1 | 1 | 1 | 1 | 1 | 1 | 1 | 1 |
| Physical Properties | Vulcanization Rate (Evaluation 1) | | ○ | △ | ○ | △ | △ | △ | △ | ○ | ○ | △ | △ | △ |
| | Low Fuel Consumption Performance (Evaluation 2) | | ◎ | ○ | △ | ○ | ○ | △ | △ | ○ | ○ | ○ | ○ | △ |
| | Tensile Strength (Evaluation 3) | | △ | ○ | △ | ○ | ◎ | ○ | ◎ | △ | △ | ○ | △ | ◎ |
| | Tear Strength (Evaluation 4) | | ○ | ○ | △ | ○ | ○ | ○ | ○ | ◎ | ○ | ◎ | ○ | ○ |

[Table 4]

| | | | Example 25 | Example 26 | Example 27 | Example 28 | Example 29 | Example 30 | Example 31 | Example 32 | Example 33 | Example 34 | Example 35 | Example 36 |
|---|---|---|---|---|---|---|---|---|---|---|---|---|---|---|
| Composition | Rubber-like Polymer | type | A4 | A4 | A4 | A4 | A4 | A4 | A4 | A4 | A4 | A4 | A4 | A4 |
| | | [phr] | 100 | 100 | 100 | 100 | 100 | 100 | 100 | 100 | 100 | 100 | 100 | 100 |
| | Silica 1 | [phr] | | | 70 | 70 | 70 | 70 | 70 | 70 | 70 | 70 | 70 | 70 |
| | Silica 2 | [phr] | 70 | | | | | | | | | | | |
| | Silica 3 | [phr] | | 70 | | | | | | | | | | |
| | Carbon Black 1 | [phr] | 5 | 5 | | 5 | 5 | 5 | 5 | 5 | 5 | 5 | 5 | 5 |
| | Carbon Black 2 | [phr] | | | 5 | | | | | | | | | |
| | Softener 1 | [phr] | 35 | 35 | 35 | | | | | | | | 35 | 35 |
| | Softener 2 | [phr] | | | | 35 | | | | | | | | |
| | Softener 3 | [phr] | | | | | 35 | | | | | | | |
| | Softener 4 | [phr] | | | | | | 35 | | | | | | |
| | Softener 5 | [phr] | | | | | | | 35 | | | | | |
| | Softener 6 | [phr] | | | | | | | | 35 | | | | |
| | Softener 7 | [phr] | | | | | | | | | 35 | | | |
| | Softener 8 | [phr] | | | | | | | | | | 35 | | |
| | Silane Coupling Agent 1 | [phr] | 5.6 | 5.6 | 5.6 | 5.6 | 5.6 | 5.6 | 5.6 | 5.6 | 5.6 | 5.6 | | |
| | Silane Coupling Agent 2 | [phr] | | | | | | | | | | | 5.6 | |
| | Silane Coupling Agent 3 | [phr] | | | | | | | | | | | | 5.6 |
| | Zinc Oxide | [phr] | 2.5 | 2.5 | 2.5 | 2.5 | 2.5 | 2.5 | 2.5 | 2.5 | 2.5 | 2.5 | 2.5 | 2.5 |
| | Stearic Acid | [phr] | 2 | 2 | 2 | 2 | 2 | 2 | 2 | 2 | 2 | 2 | 2 | 2 |
| | Wax | [phr] | 1 | 1 | 1 | 1 | 1 | 1 | 1 | 1 | 1 | 1 | 1 | 1 |
| | Angi-aging Agent | [phr] | 1.5 | 1.5 | 1.5 | 1.5 | 1.5 | 1.5 | 1.5 | 1.5 | 1.5 | 1.5 | 1.5 | 1.5 |

(continued)

| | | | Example 25 | Example 26 | Example 27 | Example 28 | Example 29 | Example 30 | Example 31 | Example 32 | Example 33 | Example 34 | Example 35 | Example 36 |
|---|---|---|---|---|---|---|---|---|---|---|---|---|---|---|
| | Sulfur | [phr] | 1.5 | 1.5 | 1.5 | 1.5 | 1.5 | 1.5 | 1.5 | 1.5 | 1.5 | 1.5 | 1.5 | 1.5 |
| | Vulcanization Accelerator 1 | [phr] | 2 | 2 | 2 | 2 | 2 | 2 | 2 | 2 | 2 | 2 | 2 | 2 |
| | Vulcanization Accelerator 2 | [phr] | 1 | 1 | 1 | 1 | 1 | 1 | 1 | 1 | 1 | 1 | 1 | 1 |
| Physical Properties | Vulcanization Rate (Evaluation 1) | | △ | △ | △ | △ | △ | △ | ○ | △ | ○ | △ | △ | ○ |
| | Low Fuel Consumption Performance (Evaluation 2) | | ○ | ○ | ○ | ○ | ○ | ○ | ◎ | ○ | ○ | ○ | ○ | ○ |
| | Tensile Strength (Evaluation 3) | | ○ | ◎ | ○ | ○ | ○ | ◎ | ○ | ◎ | ○ | ○ | ○ | ○ |
| | Tear Strength (Evaluation 4) | | ○ | ○ | ○ | ○ | ○ | ○ | ○ | ○ | ○ | ○ | ○ | ○ |

[Table 5]

| | | | Comparative Example 9 | Comparative Example 10 | Comparative Example 11 | Comparative Example 12 | Comparative Example 13 | Comparative Example 14 | Comparative Example 15 | Comparative Example 16 | Reference Example |
|---|---|---|---|---|---|---|---|---|---|---|---|
| Composition | Rubber-like Polymer | type | B1 | B2 | B3 | B4 | B5 | B6 | B7 | B8 | Y031 |
| | | [phr] | 100 | 100 | 100 | 100 | 100 | 100 | 100 | 100 | 100 |
| | Silica 1 | [phr] | 70 | 70 | 70 | 70 | 70 | 70 | 70 | 70 | 70 |
| | Silica 2 | [phr] | | | | | | | | | |
| | Silica 3 | [phr] | | | | | | | | | |
| | Carbon Black 1 | [phr] | 5 | 5 | 5 | 5 | 5 | 5 | 5 | 5 | 5 |
| | Carbon Black 2 | [phr] | | | | | | | | | |
| | Softener 1 | [phr] | 35 | 35 | 35 | 35 | 35 | 35 | 35 | 35 | 35 |
| | Softener 2 | [phr] | | | | | | | | | |
| | Softener 3 | [phr] | | | | | | | | | |
| | Softener 4 | [phr] | | | | | | | | | |
| | Softener 5 | [phr] | | | | | | | | | |
| | Softener 6 | [phr] | | | | | | | | | |
| | Softener 7 | [phr] | | | | | | | | | |
| | Softener 8 | [phr] | | | | | | | | | |
| | Silane Coupling Agent 1 | [phr] | 5.6 | 5.6 | 5.6 | 5.6 | 5.6 | 5.6 | 5.6 | 5.6 | 5.6 |
| | Silane Coupling Agent 2 | [phr] | | | | | | | | | |
| | Silane Coupling Agent 3 | [phr] | | | | | | | | | |
| | Zinc Oxide | [phr] | 2.5 | 2.5 | 2.5 | 2.5 | 2.5 | 2.5 | 2.5 | 2.5 | 2.5 |
| | Stearic Acid | [phr] | 2 | 2 | 2 | 2 | 2 | 2 | 2 | 2 | 2 |
| | Wax | [phr] | 1 | 1 | 1 | 1 | 1 | 1 | 1 | 1 | 1 |
| | Angi-aging Agent | [phr] | 1.5 | 1.5 | 1.5 | 1.5 | 1.5 | 1.5 | 1.5 | 1.5 | 1.5 |

(continued)

| | | | Comparative Example 9 | Comparative Example 10 | Comparative Example 11 | Comparative Example 12 | Comparative Example 13 | Comparative Example 14 | Comparative Example 15 | Comparative Example 16 | Reference Example |
|---|---|---|---|---|---|---|---|---|---|---|---|
| | Sulfur | [phr] | 1.5 | 1.5 | 1.5 | 1.5 | 1.5 | 1.5 | 1.5 | 1.5 | 1.5 |
| | Vulcanization Accelerator 1 | [phr] | 2 | 2 | 2 | 2 | 2 | 2 | 2 | 2 | 2 |
| | Vulcanization Accelerator 2 | [phr] | 1 | 1 | 1 | 1 | 1 | 1 | 1 | 1 | 1 |
| Physical Properties | Vulcanization Rate (Evaluation 1) | | × | ○ | ○ | ○ | ○ | ○ | ○ | × | - |
| | Low Fuel Consumption Performance (Evaluation 2) | | ○ | ○ | × | × | △ | × | ○ | △ | - |
| | Tensile Strength (Evaluation 3) | | ○ | × | × | △ | × | △ | × | ◎ | - |
| | Tear Strength (Evaluation 4) | | △ | ○ | △ | × | ○ | ○ | × | × | - |

As shown in Tables 3 to 5, it was confirmed that Examples 13 to 36 have no × in the respective evaluation results, and are excellent in balance among a vulcanization rate, low fuel consumption performance, tensile strength, and tear strength as compared with Comparative Examples 9 to 16.

Industrial Applicability

A rubber-like polymer of the present invention is industrially applicable in the fields of tire treads, interiors and exteriors of vehicles, anti-vibration rubbers, belts, shoes, foam bodies, and various industrial products.

## Claims

1. A rubber-like polymer,

   wherein a sum of a content C1 of a structure represented by the following formula (1) and a content C2 of a structure represented by the following formula (2) is 40 mol% or more and 60 mol% or less;
   a content C3 of a structure represented by the following formula (3) is 15 mol% or more and 50 mol% or less;
   a content C4 of a structure represented by the following formula (4) is 5 mol% or more and 25 mol% or less, the contents C1, C2, C3 and C4 being determined by $^1$H-NMR;
   a content S of an aromatic vinyl monomer unit is 4 mol% or more and 15 mol% or less;
   a weight average molecular weight measured by gel permeation chromatography (GPC) is 300,000 or more; and
   a modification ratio measured by column adsorption GPC is 60% by mass or more:

   (1) 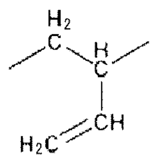 (2) 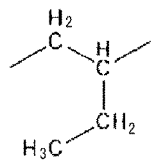

   (3) 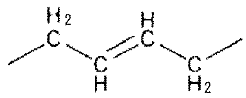 or 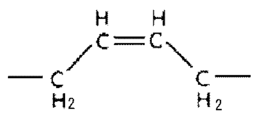 (4) 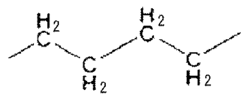

2. The rubber-like polymer according to claim 1,
   wherein a ratio between a weight average molecular weight Mw and a Mooney viscosity ML measured at 100°C, Mw/(ML x 10,000), is 0.68 or more and 0.85 or less.

3. The rubber-like polymer according to claim 1 or 2,
   wherein a nitrogen content, measured by trace nitrogen analysis, is 10 ppm or more and 80 ppm or less.

4. The rubber-like polymer according to any one of claims 1 to 3,
   wherein the nitrogen content, measured by trace nitrogen analysis, is 35 ppm or more and 80 ppm or less.

5. The rubber-like polymer according to any one of claims 1 to 4,
   wherein a silicon content, measured using an ICP mass analyzer, is 50 ppm or more and 200 ppm or less.

6. A method for producing the rubber-like polymer according to any one of claims 1 to 5, comprising:
   a step of copolymerizing a conjugated diene-based compound and an aromatic vinyl compound, and hydrogenating the resultant copolymer such that a hydrogenation rate, measured by $^1$H-NMR, of 90% or less is achieved.

7. A rubber composition, comprising:

   100 parts by mass of a rubber component including the rubber-like polymer according to any one of claims 1 to 5; and
   0.1 parts by mass or more and 20 parts by mass or less of a crosslinking agent.

**8.** A rubber composition, comprising:

100 parts by mass of a rubber component including the rubber-like polymer according to any one of claims 1 to 5; and
0.1 parts by mass or more and 30 parts by mass or less of a silane coupling agent.

**9.** A rubber composition, comprising:

100 parts by mass of a rubber component including the rubber-like polymer according to any one of claims 1 to 5; and
1 part by mass or more and 60 parts by mass or less of a softener.

**10.** A rubber composition, comprising:

100 parts by mass of a rubber component including the rubber-like polymer according to any one of claims 1 to 5; and
30 parts by mass or more and 100 parts by mass or less of silica.

**11.** A rubber composition, comprising:

100 parts by mass of a rubber component including the rubber-like polymer according to any one of claims 1 to 5; and
1 part by mass or more and 100 parts by mass or less of carbon black.

**12.** A tire tread, comprising the rubber composition according to any one of claims 7 to 11.

**Patentansprüche**

**1.** Kautschukartiges Polymer,

wobei die Summe eines Gehalts C1 einer durch die folgende Formel (1) dargestellten Struktur und eines Gehalts C2 einer durch die folgende Formel (2) dargestellten Struktur 40 mol% oder mehr und 60 mol% oder weniger beträgt;
ein Gehalt C3 einer durch die folgende Formel (3) dargestellten Struktur 15 mol% oder mehr und 50 mol% oder weniger beträgt;
ein Gehalt C4 einer durch die folgende Formel (4) dargestellten Struktur 5 mol% oder mehr und 25 mol% oder weniger beträgt,
wobei die Gehalte C1, C2, C3 und C4 durch $^{1}$H-NMR bestimmt werden;
ein Gehalt S einer aromatischen Vinylmonomereinheit 4 mol% oder mehr und 15 mol% oder weniger beträgt;
ein durch Gelpermeationschromatographie (GPC) gemessenes gewichtsmittleres Molekulargewicht 300000 oder mehr beträgt; und
ein durch Säulenadsorptions-GPC gemessener Modifikationsanteil 60 Massen-% oder mehr beträgt:

(1) 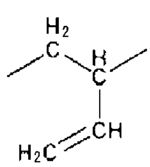 (2) 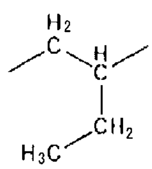

(3) 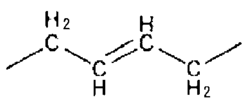 or 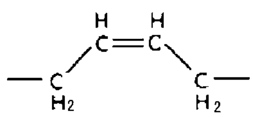 (4) 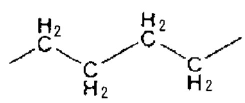

**2.** Kautschukartiges Polymer nach Anspruch 1,
wobei ein Verhältnis zwischen einem gewichtsmittleren Molekulargewicht Mw und einer bei 100°C gemessenen

Mooney-Viskosität ML, Mw/(ML x 10000), 0,68 oder mehr und 0,85 oder weniger beträgt.

**3.** Kautschukartiges Polymer nach Anspruch 1 oder 2, wobei ein durch Spurenstickstoffanalyse gemessener Stickstoffgehalt 10 ppm oder mehr und 80 ppm oder weniger beträgt.

**4.** Kautschukartiges Polymer nach einem der Ansprüche 1 bis 3, wobei der durch Spurenstickstoffanalyse gemessene Stickstoffgehalt 35 ppm oder mehr und 80 ppm oder weniger beträgt.

**5.** Kautschukartiges Polymer nach einem der Ansprüche 1 bis 4, wobei ein unter Verwendung eines ICP-Massenanalysators gemessener Siliciumgehalt 50 ppm oder mehr und 200 ppm oder weniger beträgt.

**6.** Verfahren zur Herstellung des kautschukartigen Polymers nach einem der Ansprüche 1 bis 5, mit: einem Schritt des Copolymerisierens einer Verbindung auf Basis von konjugiertem Dien und einer aromatischen Vinylverbindung, und Hydrieren des resultierenden Copolymers derart, dass ein durch $^{1}$H-NMR gemessener Hydrierungsgrad von 90% oder weniger erreicht wird.

**7.** Kautschukzusammensetzung, umfassend:

100 Massenteile einer Kautschukkomponente, die das kautschukartige Polymer nach einem der Ansprüche 1 bis 5 beinhaltet; und
0,1 Massenteile oder mehr und 20 Massenteile oder weniger eines Vernetzungsmittels.

**8.** Kautschukzusammensetzung, umfassend:

100 Massenteile einer Kautschukkomponente, die das kautschukartige Polymer nach einem der Ansprüche 1 bis 5 beinhaltet; und
0,1 Massenteile oder mehr und 30 Massenteile oder weniger eines Silankupplungsmittels.

**9.** Kautschukzusammensetzung, umfassend:

100 Massenteile einer Kautschukkomponente, die das kautschukartige Polymer nach einem der Ansprüche 1 bis 5 beinhaltet; und
1 Massenteil oder mehr und 60 Massenteile oder weniger eines Weichmachers.

**10.** Kautschukzusammensetzung, umfassend:

100 Massenteile einer Kautschukkomponente, die das kautschukartige Polymer nach einem der Ansprüche 1 bis 5 beinhaltet; und
30 Massenteile oder mehr und 100 Massenteile oder weniger Siliciumdioxid.

**11.** Kautschukzusammensetzung, umfassend:

100 Massenteile einer Kautschukkomponente, die das kautschukartige Polymer nach einem der Ansprüche 1 bis 5 beinhaltet; und
1 Massenteil oder mehr und 100 massenteile oder weniger Carbon Black bzw. Industrieruß.

**12.** Reifenlauffläche, welche die Kautschukzusammensetzung nach einem der Ansprüche 7 bis 11 umfasst.

## Revendications

**1.** Polymère de type caoutchouc,

dans lequel la somme d'une teneur C1 d'une structure représentée par la formule suivante (1) et d'une teneur C2 d'une structure représentée par la formule suivante (2) est de 40% en moles ou plus et de 60% en moles ou

moins ;
une teneur C3 d'une structure représentée par la formule suivante (3) est de 15% en moles ou plus et de 50% en moles ou moins ;
une teneur C4 d'une structure représentée par la formule suivante (4) est de 5% en moles ou plus et de 25 % en moles ou moins ;
les teneurs C1, C2, C3 et C4 étant déterminées par RMN-$^1$H ;
une teneur S d'une unité monomère vinylique aromatique est de 4 % en moles ou plus et de 15 % en moles ou moins ;
un poids moléculaire moyen en poids mesuré par chromatographie par perméation de gel (GPC) est de 300 000 ou plus ; et
un taux de modification mesuré par adsorption sur colonne GPC est de 60 % en masse ou plus :

(1) 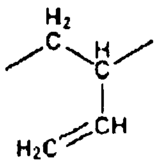 (2) 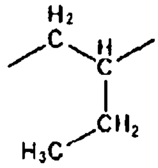

(3) 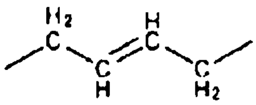 or 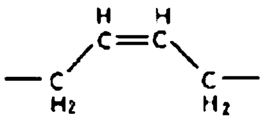 (4) 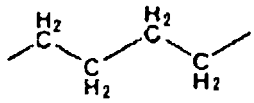

2. Polymère de type caoutchouc selon la revendication 1, dans lequel le rapport entre un poids moléculaire moyen Mw et une viscosité Mooney ML mesurée à 100 °C, Mw/(ML x 10 000), est de 0,68 ou plus et de 0,85 ou moins.

3. Polymère de type caoutchouc selon la revendication 1 ou 2, dans lequel la teneur en azote, mesurée par analyse de trace d'azote, est de 10 ppm ou plus et de 80 ppm ou moins.

4. Polymère de type caoutchouc selon l'une quelconque des revendications 1 à 3, dans lequel la teneur en azote, mesurée par analyse de trace d'azote, est de 35 ppm ou plus et de 80 ppm ou moins.

5. Polymère de type caoutchouc selon l'une quelconque des revendications 1 à 4, dans lequel la teneur en silicium, mesurée en utilisant un analyseur de masse ICP, est de 50 ppm ou plus et de 200 ppm ou moins.

6. Procédé de production du polymère de type caoutchouc selon l'une quelconque des revendications 1 à 5, comprenant :
une étape de copolymérisation d'un composé à base de diène conjugué et d'un composé vinylique aromatique, et d'hydrogénation du copolymère résultant de manière à atteindre un taux d'hydrogénation, mesuré par RMN-$^1$H, de 90 % ou moins.

7. Composition de caoutchouc, comprenant :

100 parties en masse d'un composant de caoutchouc comprenant le polymère de type caoutchouc selon l'une quelconque des revendications 1 à 5 ; et
0,1 partie en masse ou plus et 20 parties en masse ou moins d'un agent de réticulation.

8. Composition de caoutchouc, comprenant :

100 parties en masse d'un composant de caoutchouc comprenant le polymère de type caoutchouc selon l'une quelconque des revendications 1 à 5 ; et
0,1 partie en masse ou plus et 30 parties en masse ou moins d'un agent de couplage silane.

9. Composition de caoutchouc, comprenant :

100 parties en masse d'un composant de caoutchouc comprenant le polymère de type caoutchouc selon l'une quelconque des revendications 1 à 5 ; et

1 partie en masse ou plus et 60 parties en masse ou moins d'un ramolissant.

**10.** Composition de caoutchouc, comprenant :

100 parties en masse d'un composant de caoutchouc comprenant le polymère de type caoutchouc selon l'une quelconque des revendications 1 à 5 ; et
30 parties en masse ou plus et 100 parties en masse ou moins de silice.

**11.** Composition de caoutchouc, comprenant :

100 parties en masse d'un composant en caoutchouc comprenant le polymère de type caoutchouc selon l'une quelconque des revendications 1 à 5 ; et
1 partie en masse ou plus et 100 parties en masse ou moins de noir de carbone.

**12.** Bande de roulement de pneu, comprenant la composition de caoutchouc selon l'une quelconque des revendications 7 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017150645 A
- WO 2019151126 A
- WO 2019151127 A
- WO 2019078083 A
- WO 2014133097 A1
- WO 2017047451 A1
- WO 2017086208 A1
- JP 2000053706 A
- WO 9605250 A
- WO 2003085010 A
- WO 2002002663 A
- WO 2015006179 A
- JP 59140211 A


### Non-patent literature cited in the description


- **R. R. HAMPTON**. *Analytical Chemistry*, 1949, vol. 21, 923